# EUROPEAN PATENT SPECIFICATION

(11) **EP 4 577 975 B1**
(45) Date of publication and mention of the grant of the patent: **19.08.2026**
(21) Application number: 23821042.1
(22) Date of filing: 06.11.2023
(51) Int. Cl.: G06T 5/50, G06T 11/60, G06T 5/90, G06T 5/92

(54) **TECHNIQUES FOR UTILIZING GAIN MAPS TO MANAGE VARYING STATES OF AN IMAGE**
VERFAHREN ZUR VERWENDUNG VON VERSTÄRKUNGSKARTEN ZUR VERWALTUNG VON UNTERSCHIEDLICHEN ZUSTÄNDEN EINES BILDES
TECHNIQUES D'UTILISATION DE CARTES DE GAIN POUR GÉRER DES ÉTATS VARIABLES D'UNE IMAGE

(30) Priority: 09.11.2022 US 202263383031 P; 03.11.2023 US 202318501973
(43) Date of publication of application: 02.07.2025
(73) Proprietor: Apple Inc., Cupertino CA 95014 (US)
(72) Inventor: BONNIER, Nicolas P., Cupertino, California 95014 (US); ROLAND, Jackson K., Cupertino, California 95014 (US)
(74) Representative: Lang, Johannes
(86) International application number: PCT/US2023/036874
(87) International publication number: WO 2024/102336

(56) References cited:
- US-A1- 2018 182 081
- US-A1- 2022 092 749
- CHAN ERIC: "Gain Maps", 28 February 2024 (2024-02-28), XP093143161, Retrieved from the Internet <URL:https://helpx.adobe.com/content/dam/help/en/camera-raw/using/gain-map/jcr_content/root/content/flex/items/position/position-par/table/row-3u03dx0-column-4a63daf/download_section/download-1/Gain_Map_1_0d15.pdf> [retrieved on 20240319]

## Description

### FIELD OF INVENTION

The embodiments described herein set forth techniques for utilizing gain maps to manage varying states of an image. In particular, according to the present invention, a gain map can be utilized to provide a variety of features, including generating a second version of an image by utilizing a first version of the image and the gain map according to the features of the independent claims.

### BACKGROUND

The dynamic range of an image refers to the range of pixel values between the image's lightest and darkest parts (often referred to as "luminance"). Notably, conventional image sensors can only capture a limited range of luminance in a single exposure of a scene, at least relative to what human eyes are able to perceive from the same scene. This limited range is typically referred to as standard dynamic range (SDR) in the world of digital photography.

Despite the foregoing image sensor limitations, improvements in photography techniques have enabled wider ranges of light to be captured (referred to herein as high dynamic range (HDR)). This can be achieved by (1) capturing multiple "brackets" of images, i.e., images with different exposure times (also called "stops"), and then (2) fusing the bracketed images into a single image that incorporates different aspects of the different exposures. In this regard, the single HDR image possesses a wider dynamic range of luminance in comparison to what otherwise can be captured in each of the individual exposures. This makes HDR images superior to SDR images in several aspects.

Display devices capable of displaying HDR images (in their true form) are becoming more accessible due to advancements in design and manufacturing technologies. However, a majority of display devices that are currently in use (and continue to be manufactured) are only capable of displaying SDR images. Consequently, devices with SDR-limited displays that receive HDR images must perform various tasks to convert (i.e., downgrade) the HDR image to an SDR image equivalent. Conversely, devices with HDR-capable displays that receive SDR images may attempt to perform various tasks to convert (i.e., upgrade) the SDR image to an HDR image equivalent.

Unfortunately, the foregoing conversion techniques typically produce inconsistent and/or undesirable results. In particular, downgrading an HDR image to an SDR image can introduce visual artifacts (e.g., banding) into the resulting image that often are uncorrectable through additional image processing. Conversely, upgrading an SDR image to an HDR image involves applying varying levels of guesswork, which also can introduce uncorrectable visual artifacts.

Accordinglv, what is needed is a technique for enabling images to be efficiently and accurately transitioned between different states. For example, it is desirable to enable an HDR image to be downgraded to its true SDR counterpart (and vice versa) without relying on the foregoing (and deficient) conversion techniques.

US 2018/182081 A1 discloses a method including receiving image data representing an image. The image data includes first image data representing a first version of the image. The image data includes second image data representing a second version of the image. The method includes generating gain-related data based on the first image data and the second image data. The method includes generating effective gain-related data at least based on the gain-related data and a gain-related control parameter. The method includes applying the effective gain-related data to the image data to generate output image data representing an output version of the image.

US 2022/092749 A1 discloses methods for creating and/or displaying backwards-compatible High Dynamic Range (HDR) images, comprising: obtaining two or more exposures of a scene; creating a gain map based on at least one of the two or more exposures, wherein the gain map comprises a plurality of pixels each corresponding to a portion of the scene, and wherein values of the pixels in the gain map comprise indications of a brightness level of the corresponding portions of the scene; combining the two or more exposures to form a first image; tone mapping the first image based on a Standard Dynamic Range (SDR) format to generate a first SDR image of the scene; and storing the first SDR image and created gain map in a first enhanced image file.

### SUMMARY OF INVENTION

The present invention is defined by the features of the independent claim(s). Preferred advantageous embodiments thereof are defined by the sub-features of the dependent claims.

Any reference to "embodiment(s)", "example(s)" or "aspect(s) of the invention" in this description not falling under the scope of the claims should be interpreted as illustrative example(s) for understanding the invention.

Representative embodiments set forth herein disclose techniques for utilizing gain maps to manage varying states of an image. In particular, a gain map can be utilized to provide a variety of features, including generating a second version of an image by utilizing a first version of the image and the gain map.

One embodiment sets forth a method for utilizing a gain map to manage edits to different versions of an image. The method includes the steps of (1) accessing an enhanced image that includes a high dynamic range (HDR) image and the gain map, (2) extracting the HDR image and the gain map from the enhanced image, (3) generating a standard dynamic range (SDR) image using the HDR image and the gain map, (4) receiving and applying first modification instructions against the HDR image, (5) generating second modification instructions based on at least the first modification instructions, (6) applying the second modification instructions to the SDR image, (7) generating a second gain map by comparing the HDR image against the SDR image or vice-versa, and (8) embedding the second gain map into the HDR image or the SDR
image.

Another embodiment sets forth a method for utilizing a gain map to manage an output of an image on a display device. The method includes the steps of (1) accessing an enhanced image that includes a first version of an image and the gain map (2) identifying, based on a current brightness setting of a display device, a headroom
level for a second version of the image, (3) establishing a modified gain map based on the headroom level, (4) generating the second version of the image using the first version of the image and the modified gain map, and (5) causing the second version of the image to be displayed on the display device.

Yet another embodiment sets forth a method for generating a gain map that enables a standard dynamic range (SDR) image to be generated based on a high dynamic range (HDR) image and the gain map, according to some embodiments. The method includes the steps of (1) accessing the HDR image, (2) generating the SDR image by applying a global tone mapping operation to the HDR image, (3) generating the gain map by comparing the SDR image against the HDR image, (4) embedding the gain map into the HDR image, (5) receiving a request view an SDR version of the HDR image, and (6) utilizing the HDR image and the gain map to provide the SDR version of the HDR image.

Other embodiments include a non-transitory computer readable storage medium configured to store instructions that, when executed by a processor included in a computing device, cause the computing device to carry out the various steps of any of the foregoing methods. Further embodiments include a computing device that is configured to carry out the various steps of any of the foregoing methods.

Other aspects and advantages of the invention will become apparent from the following detailed description taken in conjunction with the accompanying drawings that illustrate, by way of example, the principles of the described embodiments.

### BRIEF DESCRIPTION OF THE DRAWINGS

The disclosure will be readily understood by the following detailed description in conjunction with the accompanying drawings, wherein like reference numerals designate like structural elements.
FIG. 1 illustrates an overview of a computing device that can be configured to perform the various techniques described herein, according to some embodiments.
FIGS. 2A-2H illustrate a sequence of conceptual diagrams of a technique for utilizing a gain map to manage edits to different versions of an image, according to some embodiments.
FIGS. 3A-3F illustrate a sequence of conceptual diagrams of a technique for utilizing a gain map to manage an output of an image on a display device, according to some embodiments.
FIGS. 4A-4F illustrate a sequence of conceptual diagrams for generating a gain map that enables a standard dynamic range (SDR) image to be generated based on a high dynamic range (HDR) image and the gain map, according to some embodiments.
FIG. 5 illustrates a detailed view of a computing device that can be used to implement the various techniques described herein, according to some embodiments.

### DETAILED DESCRIPTION

Representative applications of methods and apparatus according to the present application are described in this section. These examples are being provided solely to add context and aid in the understanding of the described embodiments. It will thus be apparent to one skilled in the art that the described embodiments can be practiced without some or all of these specific details. In other instances, well-known process steps have not been described in detail in order to avoid unnecessarily obscuring the described embodiments. Other applications are possible, such that the following examples should not be taken as limiting.

In the following detailed description, references are made to the accompanying drawings, which form a part of the description, and in which are shown, by way of illustration, specific embodiments in accordance with the described embodiments. Although these embodiments are described in sufficient detail to enable one skilled in the art to practice the described embodiments, it is understood that these examples are not limiting such that other embodiments can be used, and changes can be made without departing from the spirit and scope of the described embodiments.

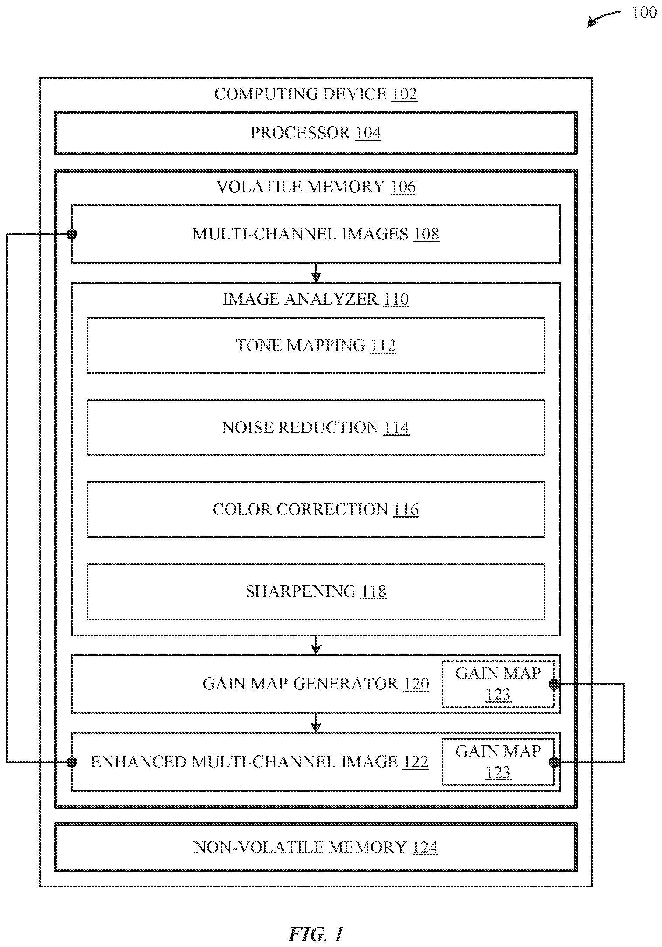

Representative embodiments set forth herein disclose techniques for utilizing gain maps to manage varying states of an image. In particular, a gain map can be utilized to provide a variety of features, including generating a second version of an image by utilizing a first version of the image and the gain map. A more detailed description of these techniques is provided below in conjunction with FIGS. 1, 2A-2H, 3A-3F, 4A-4F and 5.

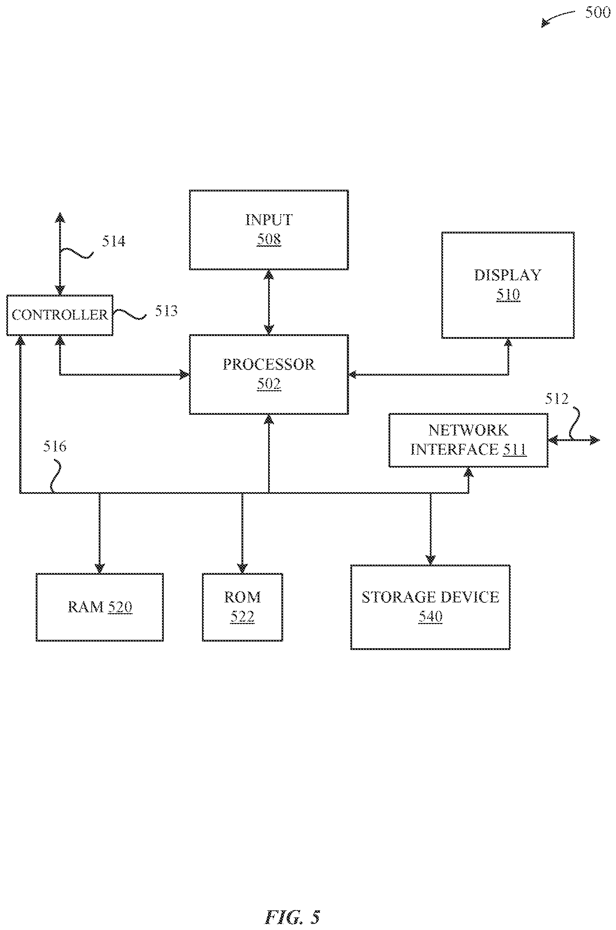

FIG. 1 illustrates an overview 100 of a computing device 102 that can be configured to perform the various techniques described herein. As shown in FIG. 1, the computing device 102 can include a processor 104, a volatile memory 106, and a non-volatile memory 124. It is noted that a more detailed breakdown of example hardware components that can be included in the computing device 102 is illustrated in FIG. 5, and that these components are omitted from the illustration of FIG. 1 merely for simplification purposes. For example, the computing device 102 can include additional non-volatile memories (e.g., solid-state drives, hard drives, etc.), other processors (e.g., a multi-core central processing unit (CPU)), a graphics processing unit (GPU), and so on). According to some embodiments, an operating system (OS) (not illustrated in FIG. 1) can be loaded into the volatile memory 106, where the OS can execute a variety of applications that collectively enable the various techniques described herein to be implemented. For example, these applications can include an image analyzer 110 (and its internal components), a gain map generator 120 (and its internal components), one or more compressors (not illustrated in FIG. 1), and so on.

As shown in FIG. 1, the volatile memory 106 can be configured to receive multiple-channel images 108. The multiple-channel images 108 can be provided, for example, by a digital imaging unit (not illustrated in FIG. 1) that is configured to capture and process digital images. According to some embodiments, a multiple-channel image 108 can be composed of a collection of pixels, where each pixel in the collection of pixels includes a group of sub-pixels (e.g., a red sub-pixel, a green sub-pixel, a blue sub-pixel, etc.). It is noted that the term "sub-pixel" used herein can be synonymous with the term "channel." It is also noted that the multiple-channel images 108 can have different resolutions, layouts, bit-depths, and so on, without departing from the scope of this disclosure.

According to some embodiments, a given multiple-channel image 108 can represent a standard dynamic range (SDR) image that constitutes a single exposure of a scene that is gathered and processed by the digital imaging unit. A given multiple-channel image 108 can also represent a high dynamic range (HDR) image that constitutes multiple exposures of a scene that are gathered and processed by the digital imaging unit. To generate an HDR image, the digital imaging unit may capture a scene under different exposure brackets, e.g., three exposure brackets that are often referred to as "EV0", "EV-", and "EV+". Generally, the EVO image corresponds to a normal / ideal exposure for the scene (typically captured using auto-exposure settings of the digital imaging unit); the EV- image corresponds to an under-exposed image of the scene (e.g., four times darker than EV0), and the EV+ image corresponds to an overexposed image of the scene (e.g., four times brighter than EV0). The digital imaging unit can combine the different exposures to produce a resultant image that incorporates a greater range of luminance relative to SDR images. It is noted that the multiple-channel images 108 discussed herein are not limited to SDR / HDR images. On the contrary, the multiple-channel images 108 can represent any form of digital image (e.g., scanned images, computer-generated images, etc.) without departing from the scope of this disclosure.

As shown in FIG. 1, the multiple-channel images 108 can (optionally) be provided to the image analyzer 110. According to some embodiments, the image analyzer 110 can include various components that are configured to process / modify the multiple-channel images 108 as desired. For example, the image analyzer 110 can include a tone mapping unit 112 (e.g., configured to perform global / local tone mapping operations, inverse tone mapping operations, etc.), a noise reduction unit 114 (e.g., configured to reduce global / local noise in the multiple-channel image), a color correction unit 116 (e.g., configured to perform global / local color corrections in the multiple-channel image), and a sharpening unit 118 (e.g., configured to perform global / local sharpening corrections in the multiple-channel image). It is noted that image analyzer 110 is not limited to the aforementioned processing units, and that the image analyzer 110 can incorporate any number of processing units, configured to perform any processing of / modifications to the multiple-channel images 108, without departing from the scope of this disclosure.

As shown in FIG. 1, the multiple-channel images 108 can be provided to the gain map generator 120 after being processed by the image analyzer 110. However, it is noted that the multiple-channel images 108 can bypass the image analyzer 110 and be provided to the gain map generator 120, if so desired, without departing from the scope of this disclosure. It is also noted that the multiple-channel images 108 can bypass one or more of the processing units of the image analyzer 110 without departing from the scope of this disclosure. For example, two given multiple-channel images may be passed through the tone mapping unit 112 to receive local tone mapping modifications, and then bypass the remaining process units in the image analyzer 110. In this regard, the two multiple-channel images-which have undergone local tone mapping operations-can be utilized to generate a gain map 123 that reflects the local tone mapping operations that were performed.

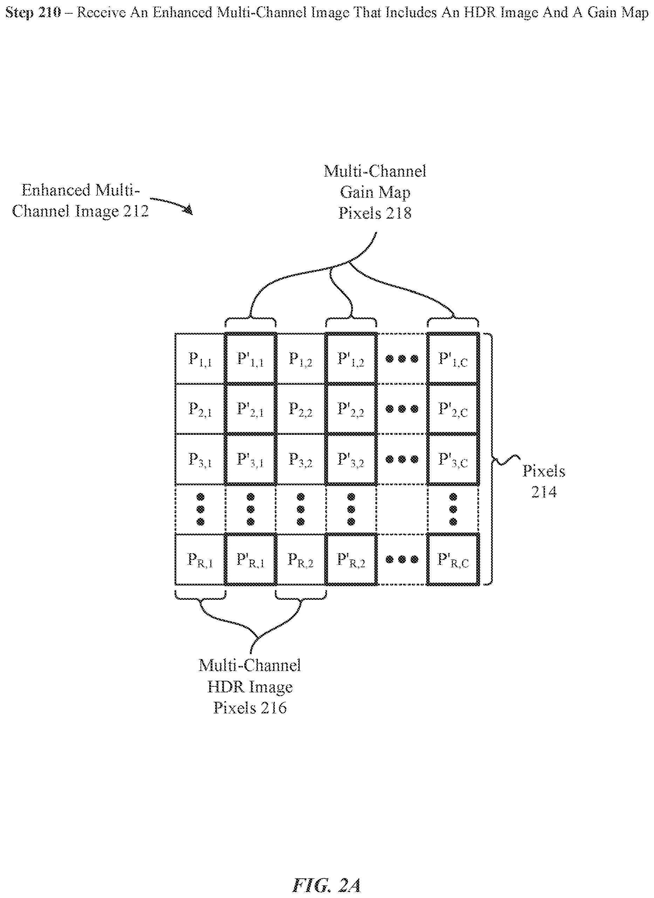

In any case-and, as described in greater detail herein-the gain map generator 120 can, upon receiving two multiple-channel images 108, generate a gain map 123 based on the two multiple-channel images 108. In turn, the gain map generator 120 can store the gain map 123 into one of the two multiple-channel images 108 to produce an enhanced multiple-channel image 122. It is additionally noted that the gain map generation techniques can be performed at any time relative to the receipt of the multiple-channel images on which the gain map will be based. For example, the gain map generator 120 can be configured to defer the generation of a gain map when the digital imaging unit is in active use in order to ensure adequate processing resources are available so that slow-downs will not be imposed on users. A more detailed breakdown of the manners in which the gain map generator 120 can generate gain maps 123 is provided below in conjunction with FIGS. 2A-2H, 3A-3F, and 4A-4F.

Additionally, and although not illustrated in FIG. 1, one or more compressors can be implemented on the computing device 102, for compressing the enhanced multiple-channel images 122. For example, the compressors can implement Lempel-Ziv-Welch (LZW)-based compressors, other types of compressors, combinations of compressors, and so on. Moreover, the compressor(s) can be implemented in any manner to establish an environment that is most efficient for compressing the enhanced multiple-channel images 122. For example, multiple buffers can be instantiated (where pixels can be pre-processed in parallel), and each buffer can be tied to a respective compressor such that the buffers can be simultaneously compressed in parallel as well. Moreover, the same or a different type of compressor can be tied to each of the buffers based on the formatting of the enhanced multiple-channel images 122.

Additionally, and although not illustrated in FIG. 1, the image analyzer 110 can be configured to receive and process enhanced multi-channel images 122 that include gain maps 123. In particular, the image analyzer 110 can be configured to receive a given enhanced multi-channel image 122, extract a baseline image from the enhanced multi-channel image 122, and extract one or more gain maps 123 included therein. In turn, the image analyzer 110 can utilize the baseline image and a particular one of the one or more gain maps 123 to reproduce a version of the baseline image from which the gain map 123 was derived. For example, if the baseline image constitutes an HDR image, and the gain map 123 was generated based on the HDR image and an SDR image that was a counterpart to the HDR image, then the gain map 123 can be applied against the HDR image to reproduce the SDR image (without requiring the SDR image itself to be included in the enhanced multi-channel image 122). It is noted that the foregoing approach represents just one example of the various manners in which the image analyzer 110 can interact with enhanced multi-channel images 122, and that more detailed breakdowns of various alternative approaches are provided below in conjunction with FIGS. 2A-2H, 3A-3F, and 4A-4F.

Accordingly, FIG. 1 provides a high-level overview of different hardware / software architectures that can be implemented by the computing device 102 in order to carry out the various techniques described herein. A more detailed breakdown of these techniques will now be provided below in conjunction with FIGS. 2A-2H, 3A-3F, and 4A-4F.

FIGS. 2A-2H illustrate a sequence of conceptual diagrams of a technique for utilizing a gain map to manage edits to different versions of an image, according to some embodiments. As shown in FIG. 2A, a step 210 can involve the computing device 102 receiving an enhanced multi-channel image 212, which is composed of pixels 214. In particular, the pixels 214 include the interleaved pixels 216 of a multiple-channel HDR image (each denoted as "P") as well as the interleaved pixels 218 of a multiple-channel gain map (each denoted as "P'"). In this regard, the enhanced multiple-channel image 212 includes information for both a multiple-channel HDR image and a multiple-channel gain map.

As a brief aside, it is noted that the information for the multiple-channel HDR image and the multiple-channel gain map can be stored in the enhanced multiple-channel image 212 using other approaches without departing from the scope of this disclosure. In particular, under another approach, each pixel 214 of the enhanced multiple-channel image 212 can incorporate information from both the corresponding pixel 216 of the multiple-channel HDR image and from the corresponding pixel 218 of the multiple-channel gain map. For example, if each pixel 216 of the multiple-channel HDR image includes three channels (e.g., red, green, and blue), and each pixel 218 of the multiple-channel gain map includes three channels (e.g., red, green, and blue), then the corresponding pixel 214 of the enhanced multiple-channel image 212 can include six channels (where the first three channels of the six channels store the three channels of the pixel 216 and the second three channels of the six channels store the three channels of the pixel 218).

**In** another approach, the pixels 216 of the multiple-channel HDR image can be stored as primary pixel information of the enhanced multiple-channel image 212, and the pixels 218 of the multiple-channel gain map can be stored as secondary (e.g., metadata-based, attachment-based, image-based, etc.) information of the enhanced multiple-channel image 212. Again, these approaches are merely exemplary, and any feasible approach for storing the multiple-channel HDR image and the multiple-channel gain map within the enhanced multiple-channel image 212 can be employed without departing from the scope of this disclosure. Additionally, it is noted that enhanced multiple-channel images 212 are not limited to storing HDR images as their baseline images. On the contrary, a given enhanced multiple-channel images 212 can store any form of image as its baseline image without departing from the scope of this disclosure. For example, the enhanced multiple-channel image 212 can instead include a multiple-channel SDR image and a multiple-channel gain map that enables a counterpart multiple-channel HDR image to be generated (using the multiple-channel SDR image and the multiple-channel gain map).

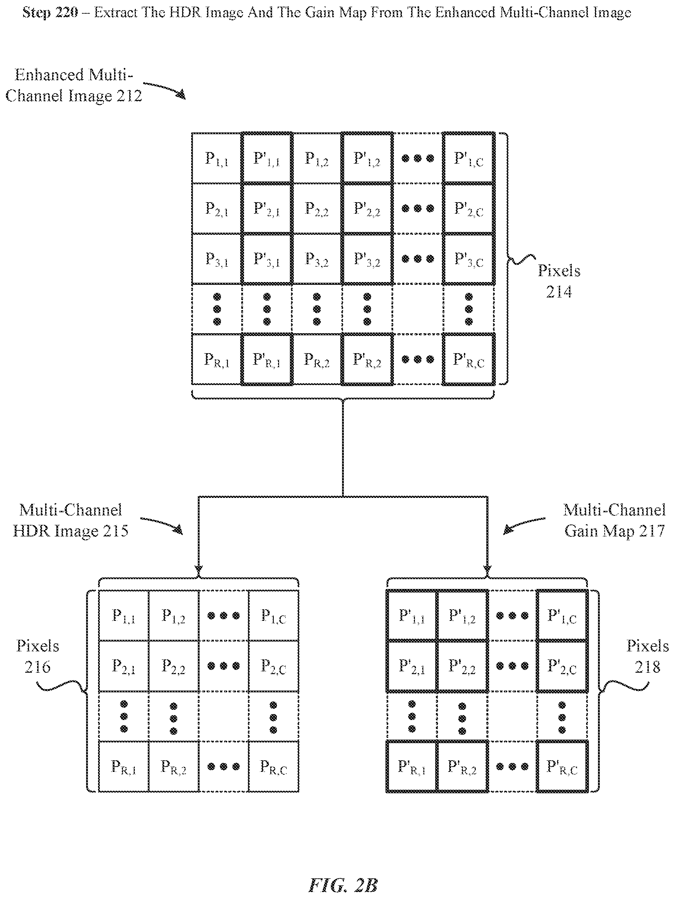

FIG. 2B illustrates a step 220 that involves the computing device 102 extracting, from the enhanced multiple-channel image 212, the multiple-channel HDR image (denoted as the multiple-channel HDR image 215 (having pixels 216)) and the multiple-channel gain map (denoted as the multiple-channel gain map 217 (having pixels 218)). As shown in FIG. 2B, the pixels 216 of the multiple-channel HDR image 215 (as well as the pixels 218 of the multiple-channel gain map 217) can be arranged according to a row / column layout, where the subscript (e.g., "1,1") of each pixel indicates the location of the pixel in accordance with the rows and columns. In the example illustrated in FIG. 2B, the pixels of multiple-channel HDR image 215 and the multiple-channel gain map 217 are arranged in an equal number of rows and columns, such that they constitute square images with corresponding / overlapping pixel arrangements. However, it is noted that the techniques described herein can be applied to multiple-channel images having different layouts (e.g., disproportionate row / column counts). Additionally, and although not illustrated in FIG. 2B, each pixel (216 / 218) can be composed of three sub-pixels-a red sub-pixel (e.g., denoted "R"), a green sub-pixel (e.g., denoted "G"), and a blue sub-pixel (e.g., denoted "B"). It is noted, however, that each pixel (216 / 218) can be composed of any number of sub-pixels without departing from the scope of this disclosure.

In any case, at the conclusion of step 220, the computing device 102 has placed both the multiple-channel HDR image 215 and the multiple-channel gain map 217 into memory (e.g., random access memory (RAM)) so that they are able to be readily accessed and manipulated by the computing device 102.

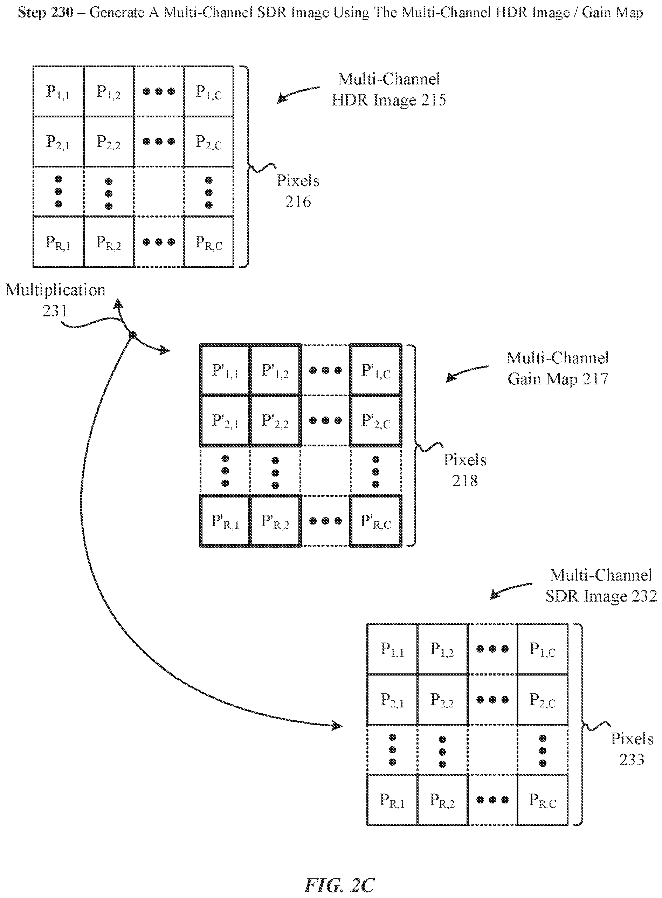

FIG. 2C illustrates a step 230 that involves the computing device 102 generating a multiple-channel SDR image 232 by performing a multiplication operation 231 that involves the multiple-channel HDR image 215 and the multiple-channel gain map 217. It is noted that the multiplication operations described herein can be performed in a linear or a non-linear space (e.g., by performing calculations in a non-linear gamma-encoded space). A brief overview of the manner in which the multiple-channel gain map 217 was originally generated-which is described below in detail-provides additional context that is helpful in understanding the manner in which the multiple-channel SDR image 232 is generated in FIG. 2C.

According to some embodiments, the multiple-channel gain map 217 was generated (at a prior time) by comparing the multiple-channel HDR image 215 to a previously-intact multiple-channel SDR image-i.e., the SDR counterpart to the multiple-channel HDR image 215. For example, the multiple-channel SDR image could have been generated based on a single-exposure capture of the same scene captured by the multiple-channel HDR image 215, such that the multiple-channel SDR image and the multiple-channel HDR image 215 are substantially related to one another. For example, if the multiple-channel HDR image 215 was generated using the EV-, EV0, and EV+ approach described herein, then the multiple-channel SDR image could have been based on the EV0 exposure (e.g., prior to the EV0 exposure being merged with the EV- and the EV+ exposures to generate the multiple-channel HDR image 215). This approach can ensure that both the multiple-channel HDR image 215 and the multiple-channel SDR image correspond to the same scene at the same moment of time. In this manner, the pixels of the multiple-channel HDR image 215 and the multiple-channel SDR image may differ only in luminosities gathered from the same points of the same scene (as opposed to differing in scene content due to movements stemming from the passage of time that would occur through sequentially captured exposures).

In any case-and, according to some embodiments-the multiple-channel gain map 217 was generated by dividing the value of each pixel of the previously-intact multiple-channel SDR image by the value of the corresponding pixel of the multiple-channel HDR image 215 to produce a quotient. In turn, the respective quotients were assigned to the values of the corresponding pixels 218 in the multiple-channel gain map 217. For example, if a given pixel of the multiple-channel HDR image 215 had a value of "5", and the corresponding pixel of the previously-intact multiple-channel SDR image had a value of "1", then the quotient was "0.2", and was assigned to the value of the corresponding pixel 218 in the multiple-channel gain map 217. In this manner-and, as described in greater detail herein-the corresponding pixel of the previously-intact multiple-channel SDR image can be reproduced by multiplying the corresponding pixel 216 of the multiple-channel HDR image 215 (having a value of "5") by the corresponding pixel 218 of the multiple-channel gain map 217 (having a value of "0.2"). In particular, the multiplication would generate a product of "1", which matches the value "1" of the corresponding pixel of the previously-intact multiple-channel SDR image.

Accordingly, storing the multiple-channel gain map 217 with the multiple-channel HDR image 215 can enable the previously-intact multiple-channel SDR image to be reproduced in FIG. 2C (as multiple-channel SDR image 232) without requiring any information about the previously-intact multiple-channel SDR image to be stored in the enhanced multiple-channel image 212. In this regard, at the conclusion of step 230, the multiple-channel SDR image 232 can be stored in a memory of the computing device 102 to enable the multiple-channel SDR image 232 to be modified and utilized.

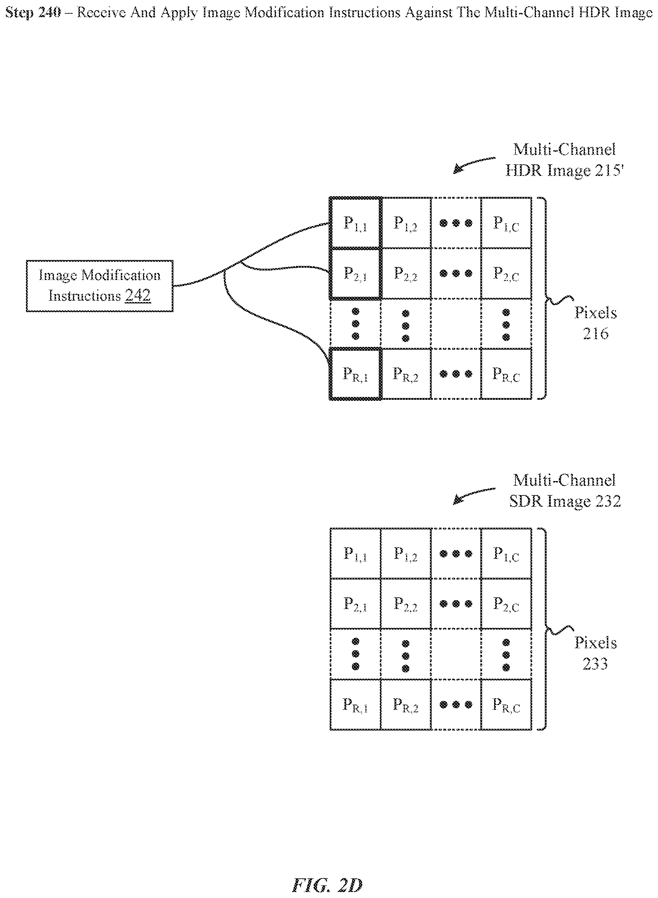

FIG. 2D illustrates a step 240 that involves the computing device 102 receiving and applying image modification instructions 242 against the multiple-channel HDR image 215. The image modification instructions 242 can represent any conceivable image modification to the multiple-channel HDR image 215. For example, the image modification instructions 242 can involve a markup being applied to multiple-channel HDR image 215, a filter being applied to the multiple-channel HDR image 215, a photographic style being applied to the multiple-channel HDR image 215, a destination display device profile being applied to the multiple-channel HDR image 215, a color correction profile being applied to the multiple-channel HDR image 215, and so on. It is noted that the foregoing examples are not meant to be limiting, and that the image modification instructions 242 can represent any conceivable modification that can be made to the multiple-channel HDR image 215 without departing from the scope of this disclosure.

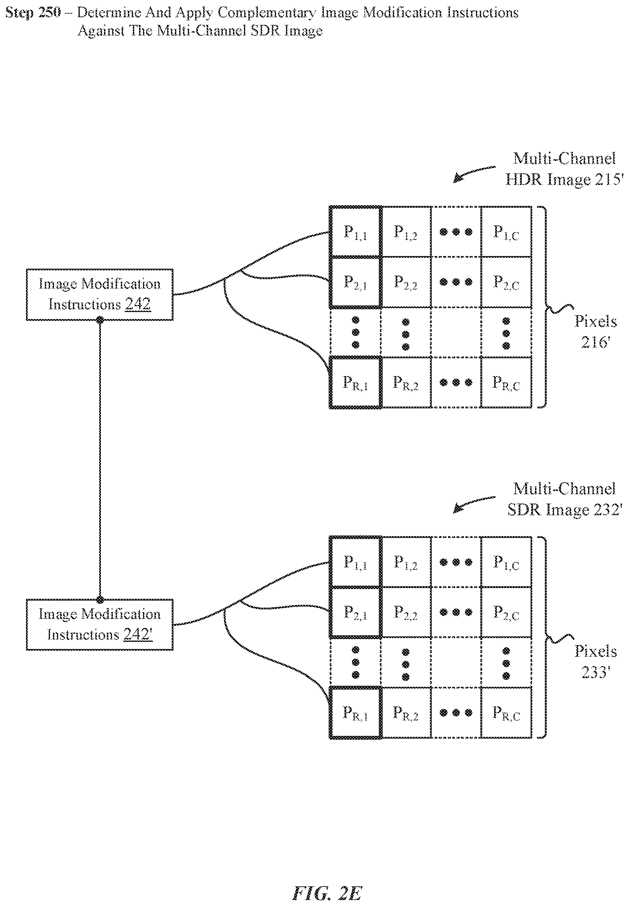

FIG. 2E illustrates a step 250 that involves the computing device 102 determining and applying complementary image modification instructions 242 (denoted as image modification instructions 242') against the multiple-channel SDR image 232. According to some embodiments, determining the complementary image modification instructions 242' can involve adjusting the image modification instructions 242 based on differences that are identified between the multiple-channel HDR image 215 and the multiple-channel SDR image 232. For example, instructions that are specific to a higher bit-range of the multiple-channel HDR image 215 may be adapted in accordance with the lower bit-range of the multiple-channel SDR image 232. It is noted that modification techniques are not limited to the foregoing example, and that the image modification instructions 242 can be adjusted in any capacity without departing from the scope of this disclosure. It is additionally noted that the image modification instructions 242 can first be applied to the multiple-channel SDR image 232 (instead of the multiple-channel HDR image 215) without departing from the scope of this disclosure. In this alternative example, the image modification instructions 242 would be adapted to account for the differences between the multiple-channel HDR image 215 and the multiple-channel SDR image 232. This could involve, for example, adjusting the image modification instructions 242 to account for the higher bit-depth available in multiple-channel HDR image 215.

In any case, at the conclusion of step 250, the image modification instructions 242' that (the complement the image modification instructions 242) are applied to the multiple-channel SDR image 232, such that the multiple-channel HDR image 215 and the multiple-channel SDR image 232 have been edited in a similar manner (while taking their differences / limitations into account). This approach provides various benefits, including eliminating the need for a user to manually determine and apply the complementary image modification instructions 242', which is a task that typically is burdensome and can yield inconsistent results.

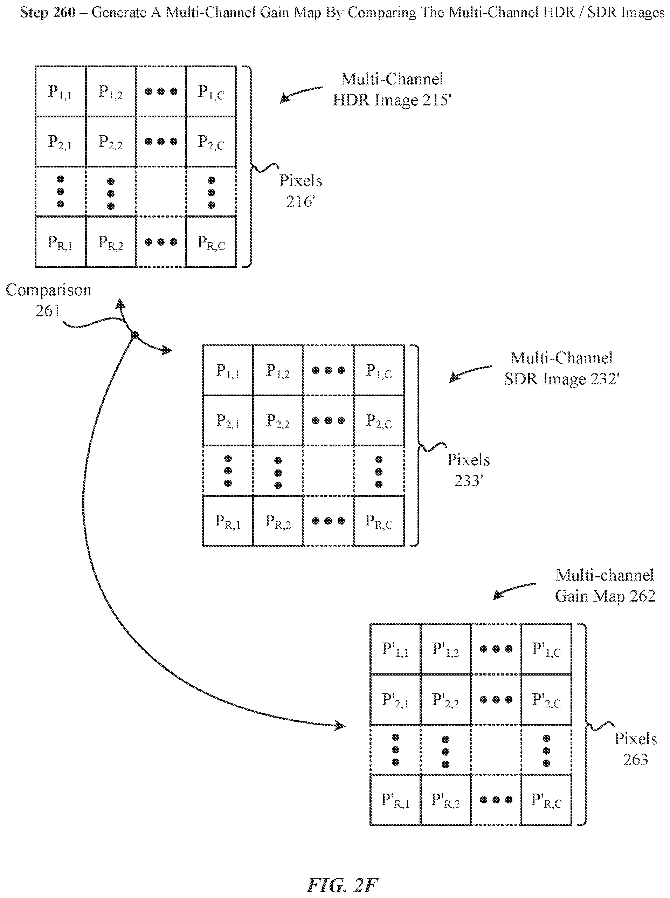

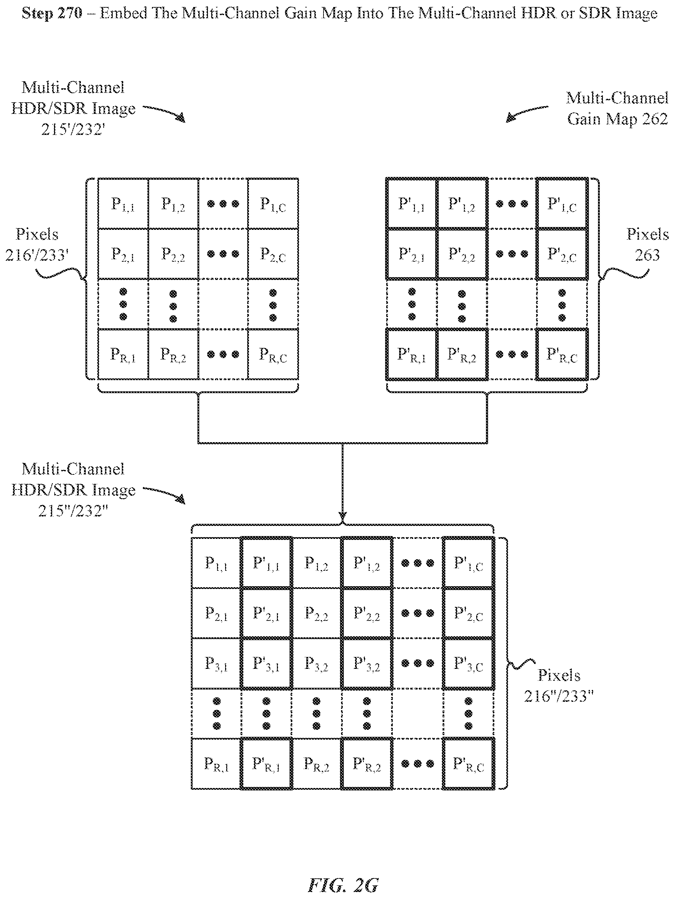

FIG. 2F illustrates a step 260 that involves the computing device 102 generating a multiple-channel gain map 262 (composed of pixels 233) by performing a comparison 261 of the multiple-channel HDR image 215 (as modified in FIG. 2D) and the multiple-channel SDR image 232 (as modified in FIG. 2E). Here, a first approach can be utilized if it is desirable to enable the multiple-channel SDR image 232 to be reproduced using the multiple-channel HDR image 215. In particular, the first approach involves dividing the value of each pixel of the multiple-channel SDR image 232 by the value of the corresponding pixel of the multiple-channel HDR image 215 to produce a quotient. In turn, the respective quotients can be assigned to the values of the corresponding pixels 263 in the multiple-channel gain map 262. For example, if the pixel denoted "P_{1,1}" of the multiple-channel HDR image 215 has a value of "4", and the pixel denoted "P_{1.1}" of the multiple-channel SDR image 232 has a value of "2", then the quotient would be "0.5", and would be assigned to the value of the pixel denoted "P_{1,1}" of the multiple-channel gain map 262. In this manner-and, as described in greater detail herein-the pixel denoted "P_{1,1}" of the multiple-channel SDR image 232 could be reproduced by multiplying the pixel denoted "P_{1,1}" of the multiple-channel HDR image 215 (having a value of "4") by the pixel denoted "P_{1,1}" of multiple-channel gain map 262 (having a value of "0.5"). In particular, the multiplication would generate a product of "2", which matches the value "2" of the pixel denoted "P_{1,1}" of the multiple-channel SDR image 232. Accordingly, storing the multiple-channel gain map 262 with the multiple-channel HDR image 215 can enable the multiple-channel SDR image 232 to be reproduced independent from the multiple-channel SDR image 232 itself. A more detailed description of the various manners in which the multiple-channel gain map 262 can be stored with counterpart multiple-channel images is described below in conjunction with FIG. 2G.

Alternatively, a second (different) approach can be utilized if it is instead desirable to enable the multiple-channel HDR image 215 to be reproduced using the multiple-channel SDR image 232. In particular, the second approach involves dividing the value of each pixel of the multiple-channel HDR image 215 by the value of the corresponding pixel of the multiple-channel SDR image 232 to produce a quotient. In turn, the respective quotients can be assigned to the values of the corresponding pixels 263 in the multiple-channel gain map 262. For example, if the pixel denoted "P_{1,1}" of the multiple-channel SDR image 232 has a value of "2", and the pixel denoted "P_{1,1}" of the multiple-channel HDR image 215 has a value of "8", then the quotient would be "4", and would be assigned to the value of the pixel denoted "P_{1,1}" of multiple-channel gain map 262. In this manner-and, as described in greater detail herein-the pixel denoted "P_{1,1}" of the multiple-channel HDR image 215 could be reproduced by multiplying the pixel denoted "P_{1,1}" of the multiple-channel SDR image 232 (having a value of "2") by the pixel denoted "P_{1,1}" of multiple-channel gain map 262 (having a value of "4"). In particular, the multiplication would generate a product of "8", which matches the value "8" of the pixel denoted "P_{1,1}" of multiple-channel HDR image 215. Accordingly, storing the multiple-channel gain map 262 with the multiple-channel SDR image 232 can enable the multiple-channel HDR image 215 to be reproduced independent from the multiple-channel HDR image 215 itself. Again, a more detailed description of the various manners in which the multiple-channel gain map 262 can be stored with counterpart multiple-channel images is described below in conjunction with FIG. 2G.

As a brief aside, it is noted that although the comparisons illustrated in FIG. 2F (and described herein) constitute pixel-level comparisons, the embodiments are not so limited. On the contrary, the pixels of the images can be compared to one another, at any level of granularity, without departing from the scope of this disclosure. For example, the sub-pixels of the multiple-channel HDR image 215 and the multiple-channel SDR image 232 can be compared to one another (instead of or in addition to pixel-level comparisons) such that multiple gain maps are generated under different comparison approaches (e.g., a respective gain map for each channel of color).

Additionally, it is noted that various optimizations can be employed when generating the gain maps, without departing from the scope of this disclosure. For example, when two values are identical to one another, the comparison operation can be skipped, and a single bit value (e.g., "0") can be assigned to the corresponding value in the gain map to minimize the size of (i.e., storage requirements for) the gain map. Additionally, the resolution of a gain map can smaller than the resolution of the images that are compared to generate the gain map. For example, an approximation of every four pixels in a first image can be compared against an approximation of every four corresponding pixels in a second image in order to generate a gain map that is one quarter of the resolution of the first and second images. This approach would substantially reduce the size of the gain map but would lower the overall accuracy by which the first image can be reproduced from the second image and the gain map (or vice versa). Additionally, first and second images can be resampled in any conceivable fashion prior to generating a gain map. For example, the first and second images could undergo local tone mapping operations prior to generating a gain map.

FIG. 2G illustrates a step 270 that involves the computing device 102 embedding the multiple-channel gain map 262 into the multiple-channel HDR image 215 or the multiple-channel SDR image 232, according to some embodiments. In particular, if the first approach discussed above in conjunction with FIG. 2F is utilized-which enables the multiple-channel SDR image 232 to be reproduced using the multiple-channel HDR image 215 and the multiple-channel gain map 262-then the computing device 102 embeds the multiple-channel gain map 262 into the multiple-channel HDR image 215 (thereby yielding an enhanced multiple-channel image 122). As shown in FIG. 2G, one approach for embedding the multiple-channel gain map 262 into the multiple-channel HDR image 215 involves interleaving each pixel 263 (of the multiple-channel gain map 262) against its corresponding pixel 216 (of the multiple-channel HDR image 215). An alternative approach can involve embedding each pixel 263 (of the multiple-channel gain map 262) into its corresponding pixel 216 (of the multiple-channel HDR image 215) as an additional channel of the pixel 216. Yet another approach can involve embedding the multiple-channel gain map 262 as metadata that is stored with the multiple-channel HDR image 215. It is noted that the foregoing approaches are exemplary and not meant to be limiting, and that the multiple-channel gain map 262 (as well as other supplemental gain maps, if generated) can be stored with the multiple-channel HDR image 215, using any conceivable approach, without departing from the scope of this disclosure. Additionally, it is noted that similar (i.e., complementary) procedures can be applied if the second approach discussed above in conjunction 2F is utilized-which enables the multiple-channel HDR image 215 to be reproduced using the multiple-channel SDR image 232 and the multiple-channel gain map 262.

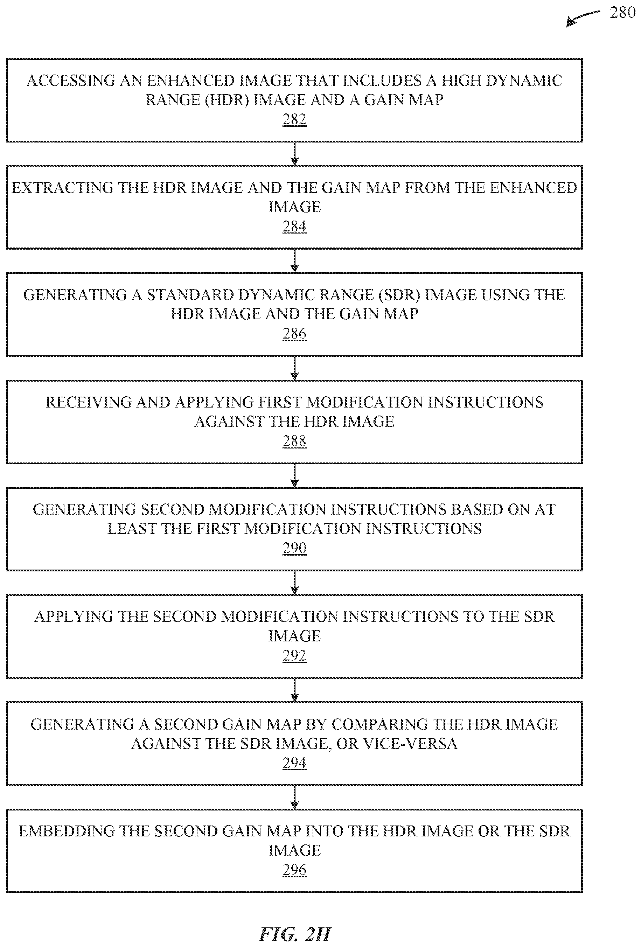

FIG. 2H illustrates a method 280 for utilizing a gain map to manage edits to different versions of an image, according to some embodiments. As shown in FIG. 2H, the method 280 begins at step 282, where the computing device 102 accesses an enhanced image that includes a high dynamic range (HDR) image and a gain map (e.g., as described above in conjunction with FIG. 2A). At step 284, the computing device 102 extracts the HDR image and the gain map from the enhanced image (e.g., as described above in conjunction with FIG. 2B). At step 286, the computing device 102 generates a standard dynamic range (SDR) image using the HDR image and the gain map (e.g., as described above in conjunction with FIG. 2C).

At step 288, the computing device 102 receives and applies first modification instructions against the HDR image (e.g., as described above in conjunction with FIG. 2D). At step 290, the computing device 102 generates second modification instructions based on at least the first modification instructions (e.g., as described above in conjunction with FIG. 2E). At step 292, the computing device 102 applies the second modification instructions to the SDR image (e.g., as also described above in conjunction with FIG. 2E). At step 294, the computing device 102 generates a second gain map by comparing the HDR image against the SDR image, or vice-versa (e.g., as described above in conjunction with FIG. 2F). At step 296, the computing device 102 embeds the second gain map into the HDR image or the SDR image (e.g., as described above in conjunction with FIG. 2G).

Additionally, it is noted that under an alternative approach, the generation of the multiple-channel SDR image 232 (described above in conjunction with FIG. 2C) can be omitted when the computing device 102 determines that image modification instructions 242 applied against the multiple-channel HDR image 215 can be modified to apply against the multiple-channel gain map 217. In particular, the multiple-channel gain map 217 can be modified to produce a modified multiple-channel gain map 217 that, when applied against the multiple-channel HDR image 215, generates the multiple-channel SDR image 232 as if the multiple-channel SDR image 232 had been modified using the techniques described above in conjunction with step 250 of FIG. 2E. This approach can improve the overall efficiency by which the computing device 102 implements the image modification instructions in that redundant modifications to the multiple-channel SDR image 232-as well as subsequent gain map regeneration operations-can be eliminated.

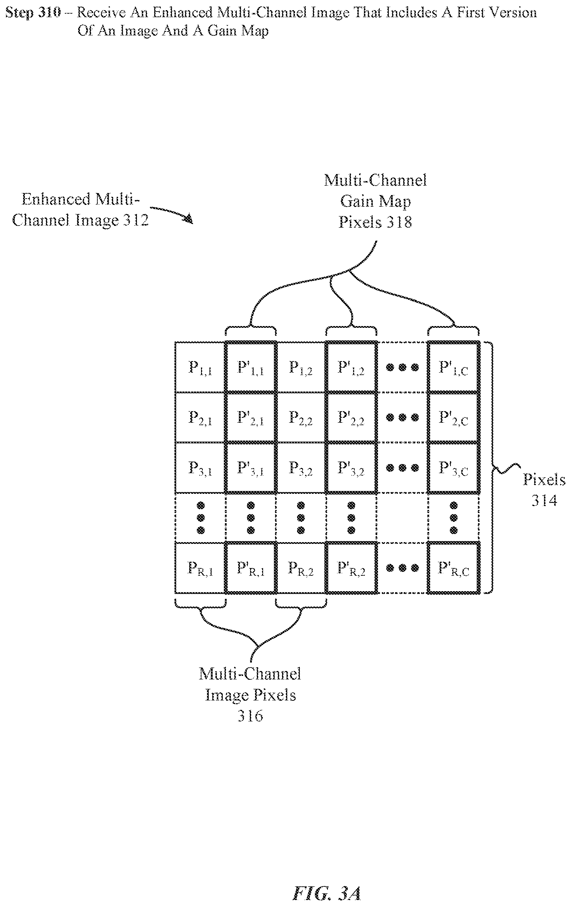

FIGS. 3A-3F illustrate a sequence of conceptual diagrams of a technique for utilizing a gain map to manage an output of an image on a display device, according to some embodiments. As shown in FIG. 3A, a step 310 can involve the computing device 102 receiving an enhanced multiple-channel image 312, which is composed of pixels 314. In particular-and, similar to the scenario described above in conjunction with FIG. 2A-the pixels 314 include the interleaved pixels 316 of a first version of a multiple-channel image (each denoted as "P") as well as the interleaved pixels 318 of a multiple-channel gain map (each denoted as "P'"). In this regard, the enhanced multiple-channel image 312 includes information for both a first version of the multiple-channel image and a multiple-channel gain map. Again, it is noted that the embedding approach illustrated in FIG. 3A is not meant to be limiting, and that the information for the first version of the multiple-channel image and the multiple-channel gain map can be incorporated into the enhanced multiple-channel image 312, using any conceivable approach, without departing from the scope of this disclosure.

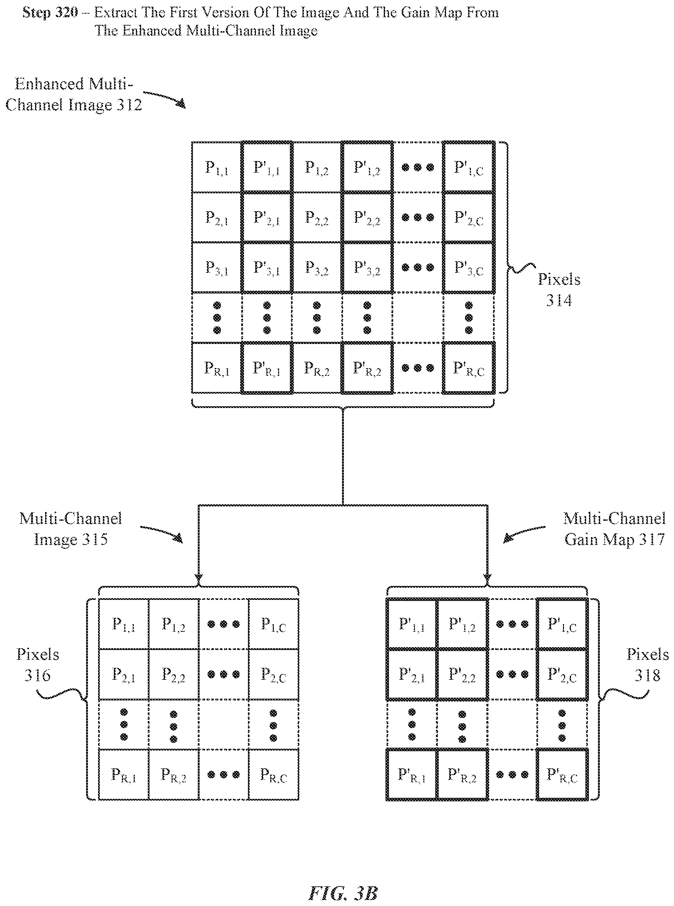

FIG. 3B illustrates a step 320 that involves the computing device 102 extracting, from the enhanced multiple-channel image 312, the first version of the multiple-channel image (denoted as the multiple-channel image 315) and the multiple-channel gain map (denoted as the multiple-channel gain map 317). The same or similar techniques described above in conjunction with FIG. 2B can be utilized to carry out this extraction. In any case, at the conclusion of step 320, the computing device 102 has placed both the multiple-channel image 315 and the multiple-channel gain map 317 into memory (e.g., random access memory (RAM)) so that they are able to be readily accessed and manipulated by the computing device 102.

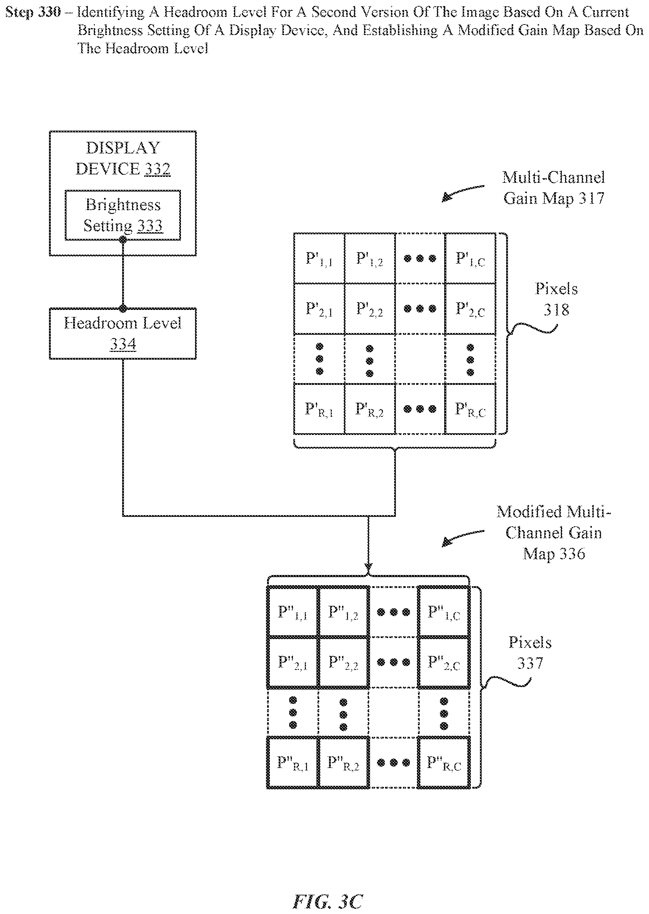

FIG. 3C illustrates a step 330 that involves the computing device 102 identifying a headroom level 334 for a second version of the image based on a current brightness setting 333 of a display device 332 (that is communicably coupled to the computing device 102). According to some embodiments, the current brightness setting 333 of the display device 332 can affect the dynamic range of colors / luminosities that the display device 332 is capable of accurately displaying for human perception. In particular, as the brightness setting of a display device increases, the dynamic range of colors / luminosities capable of being accurately output by the display device 332 shrinks; whereas, as the brightness setting of a display device decreases, the dynamic range of colors / luminosities capable of being accurately output by the display device 332 increases. In this regard, it can be beneficial to scale the range of colors / luminosities of a given image-which can be performed using the aforementioned headroom level 334-in accordance with the current brightness of the display device. This approach provides various benefits in that the display device is not tasked with displaying an image that possesses colors / luminosities that fall outside of the current range the display device is capable of displaying.

Additional factors can be considered when generating the headroom level 334 without departing from the scope of this disclosure. For example, the headroom level 334 can be based on environmental factors such as current external lighting conditions (e.g., detectable using one or more light sensors) relative to the display device 332 (that, like the current brightness setting 333 of the display device 332, can affect the colors / luminosities capable of being output by the display device 332 and accurately perceived by humans). In another example, the headroom level 334 could be based on wear-level information associated with the display device 332. For example, the wear-level information (i.e., a pixel-level usage map) could indicate that certain pixels of the display device 332 have been exercised at a higher frequency relative to the other pixels of the display device 332, thereby rendering them less capable of accurately displaying colors / luminosities. It is noted that the foregoing examples are not meant to be limiting, and that any information that affects the ability of the display device 332 to accurately display colors / luminosities can be used to establish the headroom level 334, at any level of granularity, without departing from the scope of this disclosure.

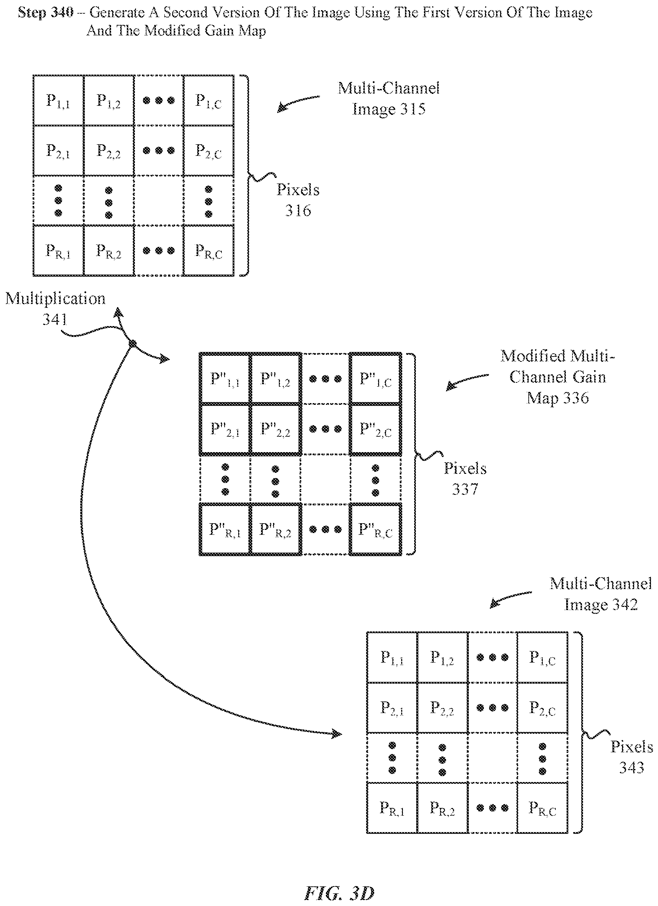

According to some embodiments, the headroom level 334 represents a single value (e.g., a weight) to be applied against the multiple-channel gain map 317 prior to utilizing the multiple-channel gain map 317 to generate the second version of the multiple-channel image (the details of which are described below in conjunction with FIG. 3D). Under another approach, the headroom level 334 can take the form of a collection of weights that are respectively and correspondingly applied against the multiple-channel gain map 317. This approach could include, for example, a respective weight for each pixel included in the enhanced multiple-channel image 312 (a 1: 1 ratio), a respective weight for every two pixels included in the enhanced multiple-channel image 312 (a 1:2 ratio), a respective weight for every N pixels included in the enhanced multiple-channel image 312 (a 1:N ratio). Again, it is noted that the foregoing examples are not meant to be limiting, and that the headroom level 334 can take any form to modify the multiple-channel gain map 317 at any level of granularity without departing from the scope of this disclosure.

**In** any case-and as shown in FIG. 3C-the step 330 involves the computing device 102 establishing a modified multiple-channel gain map 336 (that includes pixels 337) based on the headroom level 334. As shown in FIG. 3C, the pixels 337 of the multiple-channel gain map 336 are denoted "P"" to indicate that they have been modified relative to the pixels 318 of the multiple-channel gain map 317 denoted "P'".

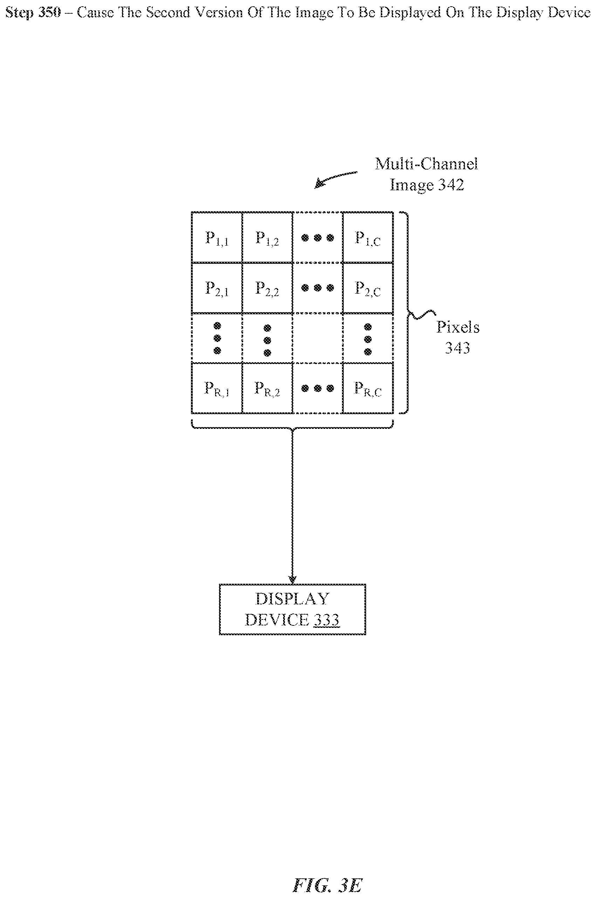

FIG. 3D illustrates a step 340 that involves the computing device 102 generating a second version of the multiple-channel image by performing a multiplication operation 341 that involves the first version of the multiple-channel image (i.e., the multiple-channel image 315) and the modified multiple-channel gain map 336. As shown in FIG. 3D, techniques similar to those described above in conjunction with FIG. 2C can be employed perform the aforementioned generation of the modified multiple-channel gain map 336. In any case, the generation yields the second version of the multiple-channel image (illustrated in FIG. 3D as the multiple-channel image 342 (that includes pixels 343) that is capable of being output on the display device 332. Accordingly, FIG. 3E illustrates a step 350 that involves the computing device 102 causing the second version of the multiple-channel image (i.e., the multiple-channel image 342) to be displayed on the display device 332. In this regard, the multiple-channel image 342 represents a modified version of the multiple-channel image 315 that has been optimized for display on the display device 332 based on the headroom level 334 described above in conjunction with FIG. 3C.

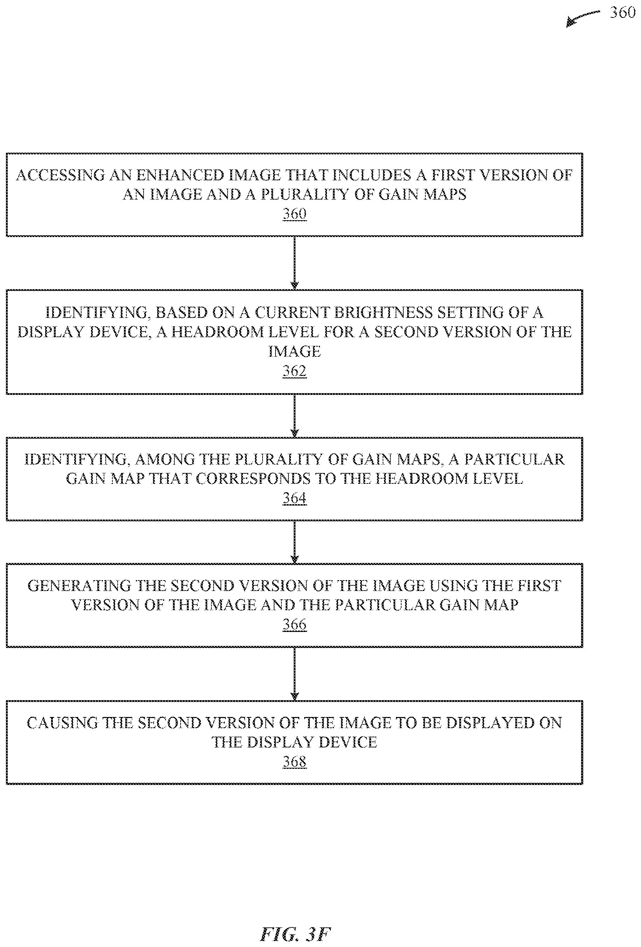

Additionally, FIG. 3F illustrates a method 360 for utilizing a gain map to manage an output of an image on a display device, according to some embodiments. As shown in FIG. 3F, the method 360 begins at step 362, where the computing device 102 accesses an enhanced image that includes a first version of an image and a plurality of gain maps. At step 362, the computing device 102 identifies, based on a current brightness setting of a display device, a headroom level for a second version of the image (e.g., as described above in conjunction with FIG. 3C). At step 364, the computing device 102 identifies, among the plurality of gain maps, a particular gain map that corresponds to the headroom level. At step 366, the computing device 102 generates the second version of the image using the first version of the image and the particular gain map. At step 368, the computing device 102 causes the second version of the image to be displayed on the display device (e.g., as described above in conjunction with FIG. 3E).

It is additionally noted that an enhanced multiple-channel image can include multiple gain maps that span a range of brightness that is capable of being exhibited by a display device. For example, if a given display device is capable of displaying twenty different brightness levels, then the enhanced multiple-channel image can include twenty different gain maps, where each gain map corresponds to a respective one of the twenty different brightness levels. In this regard, the gain map modification operations discussed above in conjunction with FIGS. 3A-3F can be replaced with a simple lookup (and application) of the appropriate gain map that corresponds to the current brightness level. This approach can increase the overall speed by which the baseline multiple-channel image in the enhanced multiple-channel image can be adjusted for output on the display device at its current brightness level. Additionally, it is noted that the multiple gain maps can be based on the other display factors discussed herein, including external lighting conditions relative to the display. This can include, for example, identifying an appropriate gain map based on the current brightness level of the display, and then modifying the appropriate gain map based on the external lighting conditions relative to the display (or vice-versa). It is noted that the foregoing approaches are not meant to be limiting, and that the enhanced multiple-channel image can include any number of gain maps, based on any number of factors that affect display output capabilities, without departing from the scope of this disclosure.

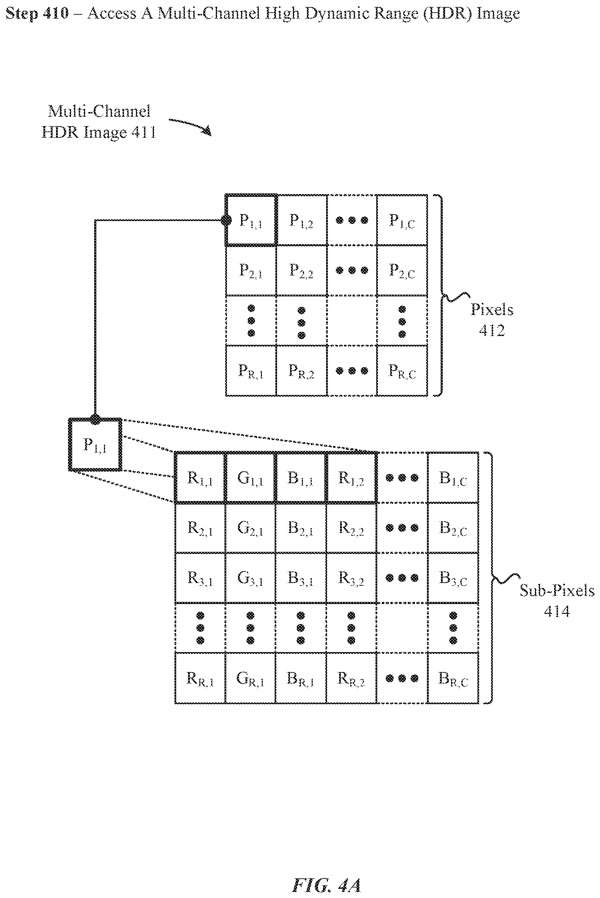

FIGS. 4A-4F illustrate a sequence of conceptual diagrams for generating a gain map that enables a standard dynamic range (SDR) image to be generated based on a high dynamic range (HDR) image and the gain map, according to some embodiments. As shown in FIG. 4A, a step 410 involves the computing device 102 accessing a multiple-channel HDR image 411 (that includes pixels 412 and sub-pixels 414, as described herein). This can involve, for example, the computing device 102 receiving a request to import the multiple-channel HDR image 411, e.g., into a photo library that is managed by the computing device 102 and accessible to users of the computing device 102. This can occur, for example, when a user is importing HDR images from advanced digital cameras (with HDR capabilities), when a user is receiving HDR images from others, and so on. Under these scenarios, it can be desirable to enable an SDR version of the HDR image to be accurately displayed when appropriate, especially if a display device that is communicably coupled with the computing device 102 is only capable of displaying the colors / luminosities of SDR images. This can also be desirable when HDR images and SDR images are displayed amongst one another as thumbnail images, which typically causes the users to view the HDR images as too bright as the SDR images as too dim (even in situations where they are being properly displayed on HDR-capable displays). In this scenario, the computing device 102 utilize gain maps to reduce (in part or in whole) the HDR images to a range the conforms with the SDR images (and/or vice-versa) in order to balance out the overall intensities of the thumbnails.

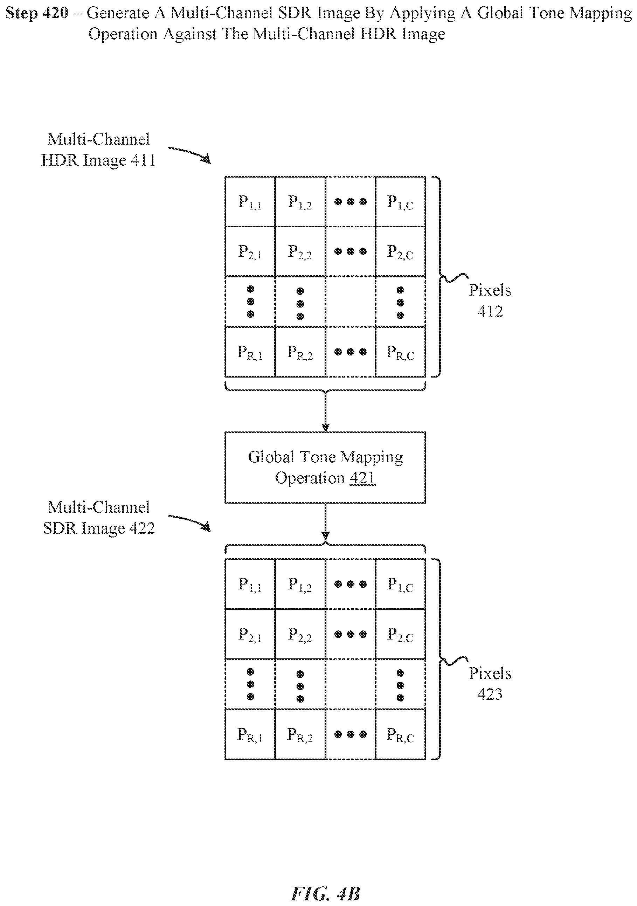

Accordingly, FIG. 4B illustrates a step 420 that involves the computing device 102 generating a multiple-channel SDR image 422 (that includes pixels 423) by applying a global tone mapping operation 421 against the multiple-channel HDR image 411. Here, the generation is necessary given the multiple-channel HDR image 411, unlike the enhanced multi-channel images discussed herein, does not (yet) include a multiple-channel gain map that enables a counterpart multiple-channel SDR image to be generated. However, as described herein, the global tone mapping operation 421 can be utilized to generate an approximation of the counterpart multiple-channel SDR image. In particular, the global tone mapping operation can involve mapping the expanded HDR color range to the more limited SDR color range, with efforts to reduce the introduction of artifacts (such as banding due to reduced bit-depths that decrease the granularity by which gradient transitions can be displayed). It is noted that any alternative (or additional) image-based processes / modifications may be applied against the multiple-channel HDR image 411 without departing from the scope of this disclosure.

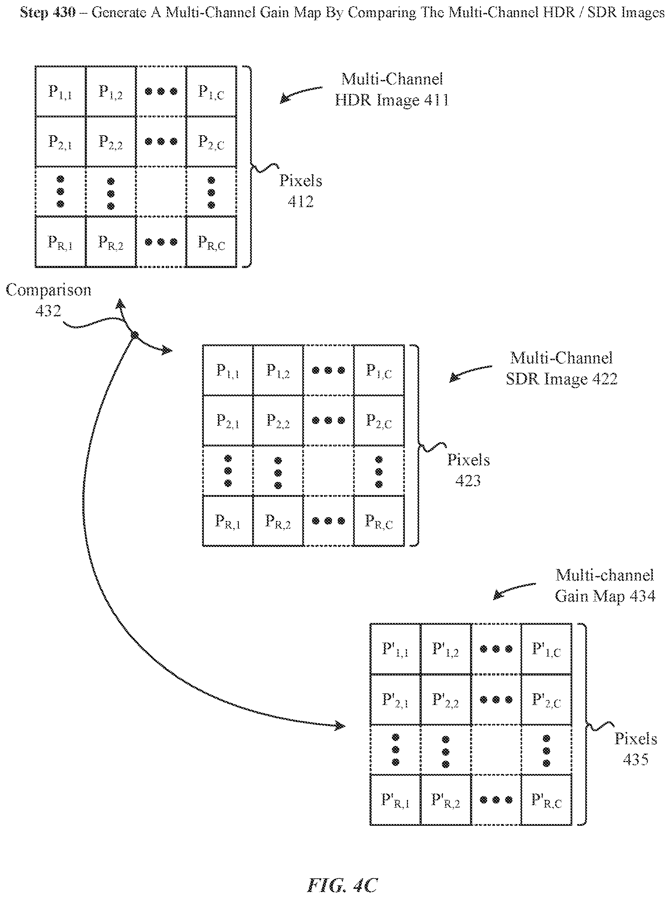

In any case, FIG. 4C illustrates a step 430 that involves the computing device 102 generating a multiple-channel gain map 434 (that includes pixels 435) by performing a comparison 432 of the multiple-channel HDR image 411 and the multiple-channel SDR image 422. The same or similar techniques described above in conjunction with FIG. 2F can be utilized to carry the comparison 432 (in particular, the first approach that involves dividing the value of each pixel of the multiple-channel SDR image 422 by the value of the corresponding pixel of the multiple-channel HDR image 411 to produce a quotient).

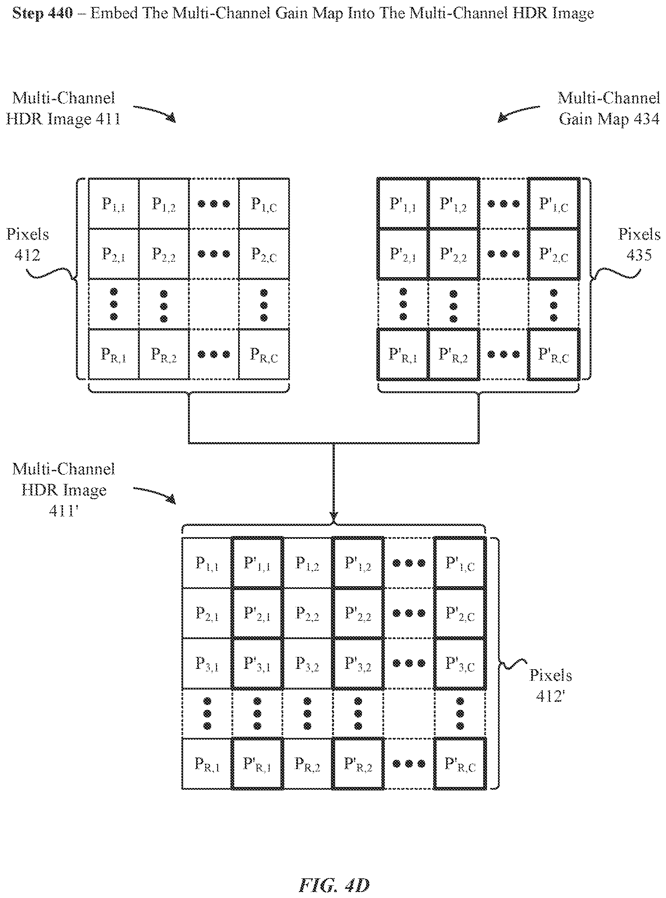

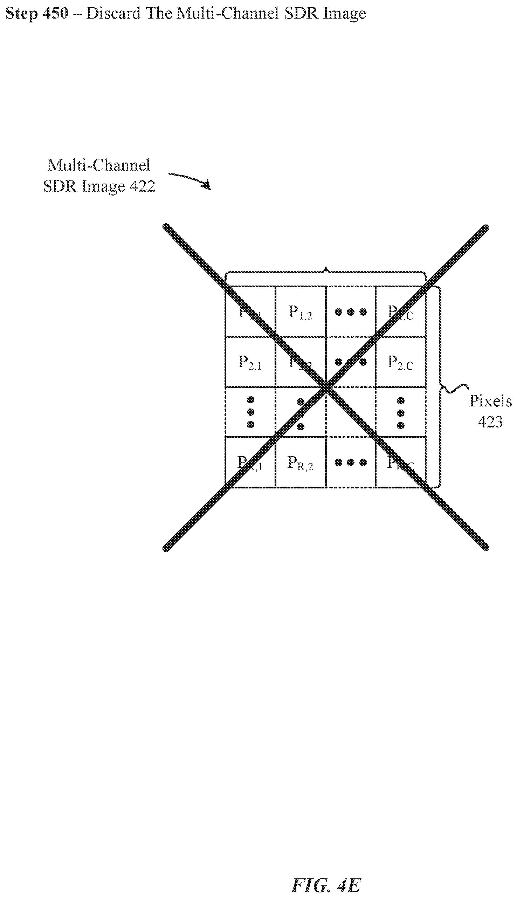

Next, FIG. 4D illustrates a step 440 that involves the computing device 102 embedding the multiple-channel gain map 434 into the multiple-channel HDR image 411. The same or similar techniques described above in conjunction with FIG. 2G can be utilized to carry out step 440-which, as shown in FIG. 4D, involves injecting information about the pixels 435 of the multiple-channel gain map 434 into the multiple-channel HDR image 411 (e.g., as adjacent pixel information, expanded channel information, attached metadata information, separate image information, etc.). At this juncture, the multiple-channel HDR image 411 effectively transitions into an enhanced multiple-channel image 122 that includes the multiple-channel HDR image 411 and the multiple-channel gain map 434. Moreover, the multiple-channel SDR image 422 can be reproduced using the multiple-channel HDR image 411 and the multiple-channel gain map 434, such that retention of the multiple-channel SDR image 422 is no longer necessary. Accordingly, FIG. 4E illustrates a step 450 that involves the computing device 102 discarding the multiple-channel SDR image 422.

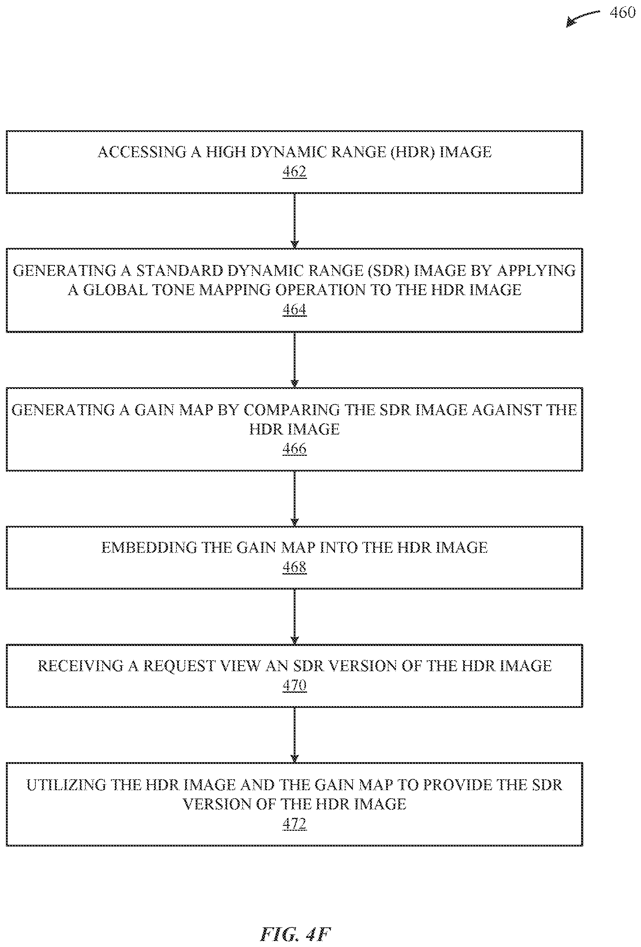

Additionally, FIG. 4F illustrates a method 460 for generating a gain map that enables a standard dynamic range (SDR) image to be generated based on a high dynamic range (HDR) image and the gain map, according to some embodiments. As shown in FIG. 4F, the method 460 begins at step 462, where the computing device 102 accesses a high dynamic range (HDR) image (e.g., as described above in conjunction with FIG. 4A). At step 464, the computing device 102 generates a standard dynamic range (SDR) image by applying a global tone mapping operation to the HDR image (e.g., as described above in conjunction with FIG. 4B).

At step 466, the computing device 102 generates a gain map by comparing the SDR image against the HDR image (e.g., as described above in conjunction with FIG. 4C). At step 468, the computing device 102 embeds the gain map into the HDR image (e.g., as described above in conjunction with FIG. 4D). At step 470, the computing device 102 receives a request view an SDR version of the HDR image. At step 472, the computing device 102 utilizes the HDR image and the gain map to provide the SDR version of the HDR image.

FIG. 5 illustrates a detailed view of a computing device 500 that can be used to implement the various techniques described herein, according to some embodiments. In particular, the detailed view illustrates various components that can be included in the computing device 102 described in conjunction with FIG. 1. As shown in FIG. 5, the computing device 500 can include a processor 502 that represents a microprocessor or controller for controlling the overall operation of the computing device 500. The computing device 500 can also include a user input device 508 that allows a user of the computing device 500 to interact with the computing device 500. For example, the user input device 508 can take a variety of forms, such as a button, keypad, dial, touch screen, audio input interface, visual/image capture input interface, input in the form of sensor data, and so on. Still further, the computing device 500 can include a display 510 that can be controlled by the processor 502 (e.g., via a graphics component) to display information to the user. A data bus 516 can facilitate data transfer between at least a storage device 540, the processor 502, and a controller 513. The controller 513 can be used to interface with and control different equipment through an equipment control bus 514. The computing device 500 can also include a network/bus interface 511 that couples to a data link 512. In the case of a wireless connection, the network/bus interface 511 can include a wireless transceiver.

As noted above, the computing device 500 also includes the storage device 540, which can comprise a single disk or a collection of disks (e.g., hard drives). In some embodiments, storage device 540 can include flash memory, semiconductor (solid state) memory or the like. The computing device 500 can also include a Random-Access Memory (RAM) 520 and a Read-Only Memory (ROM) 522. The ROM 522 can store programs, utilities, or processes to be executed in a non-volatile manner. The RAM 520 can provide volatile data storage, and stores instructions related to the operation of applications executing on the computing device 500, e.g., the image analyzer 110 / gain map generator 120.

The techniques described herein include a first technique for utilizing a gain map to manage edits to different versions of an image. According to some embodiments, the first technique can be implemented by a computing device, and includes the steps of (1) accessing an enhanced image that includes a high dynamic range (HDR) image and the gain map; (2) extracting the HDR image and the gain map from the enhanced image; (3) generating a standard dynamic range (SDR) image using the HDR image and the gain map; (4) receiving and applying first modification instructions against the HDR image; (5) generating second modification instructions based on at least the first modification instructions; (6) applying the second modification instructions to the SDR image; (7) generating a second gain map by comparing the HDR image against the SDR image or vice-versa; and (8) embedding the second gain map into the HDR image or the SDR image.

According to some embodiments, generating the second modification instructions based on at least the first modification instructions comprises: (1) identifying at least one change to the HDR image caused by applying the first modification instructions; and (2) determining how to apply a complementary at least one change to the SDR image, wherein the second modification instructions, when applied to the SDR image, cause the complementary at least one change to the SDR image.

According to some embodiments, the first technique can further include the steps of, prior to accessing the HDR image: (1) receiving at least a first exposure of a scene and a second exposure of the scene, wherein the first and second exposures are captured at a bit depth for storing HDR images; and (2) processing the first and second exposures to generate the HDR image.

According to some embodiments, comparing the HDR image against the SDR image comprises, for each pixel of the HDR image: (i) identifying a corresponding pixel in the SDR image, (ii) dividing the pixel by the corresponding pixel to generate a quotient, and (iii) storing the quotient as a corresponding pixel in the second gain map. According to some embodiments, the second gain map is embedded into the SDR image. According to some embodiments, comparing the SDR image against the HDR image comprises, for each pixel of the SDR image: (i) identifying a corresponding pixel in the HDR image, (ii) dividing the pixel by the corresponding pixel to generate a quotient, and (iii) storing the quotient as a corresponding pixel in the second gain map. According to some embodiments, the second gain map is embedded into the HDR image.

The techniques described herein include a second technique for utilizing a plurality of gain maps to manage outputs of an image on a display device. According to some embodiments, the second technique can be implemented by a computing device, and includes the steps of (1) accessing an enhanced image that includes a first version of an image and the plurality of gain maps; (2) identifying, based on a current brightness setting of the display device, a headroom level for a second version of the image; (3) identifying, among the plurality of gain maps, a particular gain map that corresponds to the headroom level; (4) generating the second version of the image using the first version of the image and the particular gain map; and (5) causing the second version of the image to be displayed on the display device.

According to some embodiments, the headroom level is further based on a color gamut capacity of the display device and/or external lighting conditions relative to the display device. According to some embodiments, the external lighting conditions are detected using at least one light sensor that is communicably couple to the computing device. According to some embodiments, the headroom level scales inversely to the current brightness setting. According to some embodiments, the second version of the image is accurately output in accordance with the brightness setting of the display device. According to some embodiments, the first version of the image comprises a standard dynamic range (SDR) version of a scene and the second version of the image comprises a high dynamic range (HDR) version of the scene. According to some embodiments, the HDR version of the scene is generated based on first, second, and third exposures of the scene; and the SDR version of the scene is generated based on the second exposure of the scene.

The techniques described herein include a third technique for generating a gain map that enables a standard dynamic range (SDR) image to be generated based on a high dynamic range (HDR) image and the gain map. According to some embodiments, the third technique can be implemented by a computing device, and includes the steps of (1) accessing the HDR image; (2) generating the SDR image by applying a global tone mapping operation to the HDR image; (3) generating the gain map by comparing the SDR image against the HDR image; (4) embedding the gain map into the HDR image; (5) receiving a request view an SDR version of the HDR image; and (6) utilizing the HDR image and the gain map to provide the SDR version of the HDR image.

According to some embodiments, the global tone mapping operation reduces a bit-depth of each pixel included in the HDR image. According to some embodiments, comparing the SDR image against the HDR image comprises, for each pixel of the SDR image: (i) identifying a corresponding pixel in the HDR image, (ii) dividing the pixel by the corresponding pixel to generate a quotient, and (iii) storing the quotient as a corresponding pixel in the gain map. According to some embodiments, embedding the gain map into the HDR image comprises, for each pixel of the gain map: (i) identifying a corresponding pixel in the HDR image, and (ii) storing values of the pixel as supplemental information in the corresponding pixel. According to some embodiments, embedding the gain map into HDR image comprises: storing the gain map as metadata that accompanies the HDR image.

According to some embodiments, utilizing the HDR image and the gain map to provide the SDR version of the HDR image comprises, for each pixel of the gain map: multiplying the pixel by a corresponding pixel in the HDR image to produce a corresponding pixel for the SDR version of the HDR image.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data which can thereafter be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A method (280) for utilizing a gain map to manage edits to different versions of an image, the method comprising, at a computing device:
accessing (282) an enhanced image that includes a high dynamic range, HDR, image and the gain map, wherein the gain map includes a plurality of pixels;
extracting (284) the HDR image and the gain map from the enhanced image;
generating (286) a standard dynamic range, SDR, image using the HDR image and the gain map;
receiving (288) and applying first modification instructions against the HDR image;
generating (290) second modification instructions based on at least the first modification instructions;
applying (292) the second modification instructions to the SDR image to create a modified SDR image;
generating (294) a second gain map by comparing the HDR image against the modified SDR image or vice-versa; and
embedding (296) the second gain map into the HDR image or the SDR image.

2. The method of claim 1, wherein embedding the second gain map into the HDR image include storing metadata indicative of the second gain map in the HDR image.

3. The method of claim 1, wherein embedding the second gain map into the HDR image includes interleaving a given pixel of the second gain map between two pixels of the HDR image.

4. The method of claim 1, wherein embedding the second gain map into the HDR image includes embedding a particular pixel of the second gain map into a corresponding pixel of the HDR image as an additional channel of the corresponding pixel.

5. The method of claim 1, wherein applying the first modification instructions against the HDR image includes applying a markup to the HDR image.

6. A non-transitory computer-readable storage medium configured to store instructions that, when executed by at least one processor included in a computing device, cause the computing device to utilize a gain map to manage edits to different versions of an image, by carrying out steps that include:
accessing an enhanced image that includes a high dynamic range, HDR, image and the gain map, wherein the gain map includes a plurality of pixels;
extracting the HDR image and the gain map from the enhanced image;
generating a standard dynamic range, SDR, image using the HDR image and the gain map;
receiving and applying first modification instructions against the HDR image;
generating second modification instructions based on at least the first modification instructions;
applying the second modification instructions to the SDR image to create a modified SDR image;
generating a second gain map by comparing the HDR image against the modified SDR image or vice-versa; and
embedding the second gain map into the HDR image or the SDR image.

7. The non-transitory computer-readable storage medium of claim 6, wherein embedding the second gain map into the HDR image include storing metadata indicative of the second gain map in the HDR image.

8. The non-transitory computer-readable storage medium of claim 6, wherein embedding the second gain map into the HDR image includes interleaving a given pixel of the second gain map between two pixels of the HDR image.

9. The non-transitory computer-readable storage medium of claim 6, wherein embedding the second gain map into the HDR image includes embedding a particular pixel of the second gain map into a corresponding pixel of the HDR image as an additional channel of the corresponding pixel.

10. The non-transitory computer-readable storage medium of claim 6, wherein applying the first modification instructions against the HDR image includes applying a markup to the HDR image.

11. A computing device configured to utilize a gain map to manage edits to different versions of an image, the computing device comprising:
at least one processor; and
at least one memory storing instructions that, when executed by the at least one processor, cause the computing device to carry out steps that include:
accessing an enhanced image that includes a high dynamic range, HDR, image and the gain map, wherein the gain map includes a plurality of pixels;
extracting the HDR image and the gain map from the enhanced image;
generating a standard dynamic range, SDR, image using the HDR image and the gain map;
receiving and applying first modification instructions against the HDR image;
generating second modification instructions based on at least the first modification instructions;
applying the second modification instructions to the SDR image to create a modified SDR image;
generating a second gain map by comparing the HDR image against the modified SDR image or vice-versa; and
embedding the second gain map into the HDR image or the SDR image.

12. The computing device of claim 11, wherein embedding the second gain map into the HDR image include storing metadata indicative of the second gain map in the HDR image.

13. The computing device of claim 11, wherein embedding the second gain map into the HDR image includes interleaving a given pixel of the second gain map between two pixels of the HDR image.

14. The computing device of claim 11, wherein embedding the second gain map into the HDR image includes embedding a particular pixel of the second gain map into a corresponding pixel of the HDR image as an additional channel of the corresponding pixel.

15. The computing device of claim 11, wherein applying the first modification instructions against the HDR image includes applying a markup to the HDR image.

## Patentansprüche

1. Verfahren (280) zur Verwendung einer Verstärkungskarte zur Verwaltung von Bearbeitungen an verschiedenen Versionen eines Bildes, wobei das Verfahren auf einem Rechner umfasst:
Zugreifen (282) auf ein verbessertes Bild, das ein Bild mit hohem Dynamikumfang (HDR) und die Verstärkungskarte beinhaltet, wobei die Verstärkungskarte eine Vielzahl von Pixeln umfasst;
Extrahieren (284) des HDR-Bildes und der Verstärkungskarte aus dem verbesserten Bild;
Erzeugen (286) eines Bildes mit Standarddynamikbereich (SDR) unter Verwendung des HDR-Bildes und der Verstärkungskarte;
Empfangen (288) und Anwenden erster Modifikationsanweisungen auf das HDR-Bild;
Erzeugen (290) zweiter Modifikationsanweisungen auf der Grundlage zumindest der ersten Modifikationsanweisungen;
Anwenden (292) der zweiten Modifikationsanweisungen auf das SDR-Bild, um ein modifiziertes SDR-Bild zu erzeugen;
Erzeugen (294) einer zweiten Verstärkungskarte durch Vergleichen des HDR-Bildes mit dem modifizierten SDR-Bild oder umgekehrt; und
Einbetten (296) der zweiten Verstärkungskarte in das HDR-Bild oder das SDR-Bild.

2. Verfahren nach Anspruch 1, wobei das Einbetten der zweiten Verstärkungskarte in das HDR-Bild das Speichern von Metadaten umfasst, die auf die zweite Verstärkungskarte hinweisen, in das HDR-Bild.

3. Verfahren nach Anspruch 1, wobei das Einbetten der zweiten Verstärkungskarte in das HDR-Bild ein Einfügen eines bestimmten Pixels der zweiten Verstärkungskarte zwischen zwei Pixel des HDR-Bildes umfasst.

4. Verfahren nach Anspruch 1, wobei das Einbetten der zweiten Verstärkungskarte in das HDR-Bild ein Einbetten eines bestimmten Pixels der zweiten Verstärkungskarte in ein entsprechendes Pixel des HDR-Bildes als zusätzlichen Kanal des entsprechenden Pixels umfasst.

5. Verfahren nach Anspruch 1, wobei das Anwenden der ersten Modifikationsanweisungen auf das HDR-Bild das Anbringen einer Markierung am HDR-Bild umfasst.

6. Nichtflüchtiges, computerlesbares Speichermedium, das so konfiguriert ist, dass es Anweisungen speichert, die, wenn sie von mindestens einem in einer Rechenvorrichtung enthaltenen Prozessor ausgeführt werden, die Rechenvorrichtung veranlassen, eine Verstärkungskarte zu verwenden, um Bearbeitungen an verschiedenen Versionen eines Bildes zu verwalten, indem Schritte ausgeführt werden, die Folgendes umfassen:
Zugreifen auf ein verbessertes Bild, das ein Bild mit hohem Dynamikumfang (HDR) und die Verstärkungskarte beinhaltet, wobei die Verstärkungskarte eine Vielzahl von Pixeln umfasst;
Extrahieren des HDR-Bildes und der Verstärkungskarte aus dem verbesserten Bild;
Erzeugen eines Bildes mit Standarddynamikbereich (SDR) unter Verwendung des HDR-Bildes und der Verstärkungskarte;
Empfangen und Anwenden erster Modifikationsanweisungen auf das HDR-Bild;
Erzeugen zweiter Modifikationsanweisungen auf der Grundlage zumindest der ersten Modifikationsanweisungen;
Anwenden der zweiten Modifikationsanweisungen auf das SDR-Bild, um ein modifiziertes SDR-Bild zu erzeugen;
Erzeugen einer zweiten Verstärkungskarte durch Vergleichen des HDR-Bildes mit dem modifizierten SDR-Bild oder umgekehrt; und
Einbetten der zweiten Verstärkungskarte in das HDR-Bild oder das SDR-Bild.

7. Nichtflüchtige, computerlesbare Speichermedium nach Anspruch 6, wobei das Einbetten der zweiten Verstärkungskarte in das HDR-Bild ein Speichern von Metadaten umfasst, die auf die zweite Verstärkungskarte hinweisen, und zwar im HDR-Bild.

8. Nichtflüchtige, computerlesbare Speichermedium nach Anspruch 6, wobei das Einbetten der zweiten Verstärkungskarte in das HDR-Bild ein Einfügen eines bestimmten Pixels der zweiten Verstärkungskarte zwischen zwei Pixel des HDR-Bildes umfasst.

9. Nichtflüchtige, computerlesbare Speichermedium nach Anspruch 6, wobei das Einbetten der zweiten Verstärkungskarte in das HDR-Bild ein Einbetten eines bestimmten Pixels der zweiten Verstärkungskarte in ein entsprechendes Pixel des HDR-Bildes als zusätzlichen Kanal des entsprechenden Pixels umfasst.

10. Nichtflüchtige, computerlesbare Speichermedium nach Anspruch 6, wobei das Anwenden der ersten Modifikationsanweisungen auf das HDR-Bild ein Anbringen einer Markierung am HDR-Bild umfasst.

11. Rechner, der so konfiguriert ist, dass er eine Verstärkungskarte verwendet, um Bearbeitungen an verschiedenen Versionen eines Bildes zu verwalten, wobei der Rechner umfasst:
mindestens einen Prozessor; und
mindestens einen Speicher, der Befehle speichert, die, wenn sie von dem mindestens einen Prozessor ausgeführt werden, bewirken, dass der Rechner Schritte ausführt, die Folgendes umfassen:
Zugreifen auf ein verbessertes Bild, das ein Bild mit hohem Dynamikumfang (HDR) und die Verstärkungskarte beinhaltet, wobei die Verstärkungskarte eine Vielzahl von Pixeln umfasst;
Extrahieren des HDR-Bildes und der Verstärkungskarte aus dem verbesserten Bild;
Erzeugen eines Bildes mit Standarddynamikbereich (SDR) unter Verwendung des HDR-Bildes und der Verstärkungskarte;
Empfangen und Anwenden erster Modifikationsbefehle auf das HDR-Bild;
Erzeugen zweiter Modifikationsanweisungen auf der Grundlage zumindest der ersten Modifikationsanweisungen;
Anwenden der zweiten Modifikationsanweisungen auf das SDR-Bild, um ein modifiziertes SDR-Bild zu erzeugen;
Erzeugen einer zweiten Verstärkungskarte durch Vergleichen des HDR-Bildes mit dem modifizierten SDR-Bild oder umgekehrt; und
Einbetten der zweiten Verstärkungskarte in das HDR-Bild oder das SDR-Bild.

12. Rechner nach Anspruch 11, wobei das Einbetten der zweiten Verstärkungskarte in das HDR-Bild ein Speichern von Metadaten umfasst, die auf die zweite Verstärkungskarte hinweisen, und zwar im HDR-Bild.

13. Rechner nach Anspruch 11, wobei das Einbetten der zweiten Verstärkungskarte in das HDR-Bild ein Einfügen eines bestimmten Pixels der zweiten Verstärkungskarte zwischen zwei Pixel des HDR-Bildes umfasst.

14. Rechner nach Anspruch 11, wobei das Einbetten der zweiten Verstärkungskarte in das HDR-Bild ein Einbetten eines bestimmten Pixels der zweiten Verstärkungskarte in ein entsprechendes Pixel des HDR-Bildes als zusätzlichen Kanal des entsprechenden Pixels umfasst.

15. Rechner nach Anspruch 11, wobei das Anwenden der ersten Modifikationsanweisungen auf das HDR-Bild einAnbringen einer Markierung am HDR-Bild umfasst.

## Revendications

1. Un procédé (280) pour utiliser une carte de gains pour gérer des modifications apportées à différentes versions d'une image, le procédé comprenant, sur un dispositif informatique :
l'accès (282) à une image enrichie qui comprend une image à plage dynamique étendue, HDR, et la carte de gains, la carte de gains comprenant une pluralité de pixels ;
l'extraction (284) de l'image HDR et de la carte de gains à partir de l'image enrichie ;
la génération (286) d'une image à plage dynamique standard, SDR, en utilisant l'image HDR et la carte de gains ;
la réception (288) et l'application de premières instructions de modification à l'égard de l'image HDR ;
la génération (290) de secondes instructions de modification basées au moins sur les premières instructions de modification ;
l'application (292) des secondes instructions de modification à l'image SDR pour créer une image SDR modifiée ;
la génération (294) d'une seconde carte de gains par comparaison de l'image HDR avec l'image SDR modifiée, ou *vice versa* ; et
l'incrustation (296) de la seconde carte de gains dans l'image HDR ou l'image SDR.

2. Le procédé de la revendication 1, dans lequel l'incrustation de la seconde carte de gains dans l'image HDR comprend le stockage dans l'image HDR de métadonnées représentatives de la seconde carte de gains.

3. Le procédé de la revendication 1, dans lequel l'incrustation de la seconde carte de gains dans l'image HDR comprend l'imbrication d'un pixel donné de la seconde carte de gains entre deux pixels de l'image HDR.

4. Le procédé de la revendication 1, dans lequel l'incrustation de la seconde carte de gains dans l'image HDR comprend l'incrustation d'un pixel particulier de la seconde carte de gains dans un pixel correspondant de l'image HDR en tant que canal additionnel du pixel correspondant.

5. Le procédé de la revendication 1, dans lequel l'application des premières instructions de modification à l'égard de l'image HDR comprend l'application d'un marqueur à l'image HDR.

6. Un support de stockage non transitoire lisible par calculateur configuré pour stocker des instructions qui, lorsqu'elles sont exécutées par au moins un processeur faisant partie d'un dispositif informatique, font en sorte que le dispositif informatique utilise une carte de gains pour gérer des modifications apportées à différentes versions d'une image, en exécutant des étapes qui comprennent :
l'accès à une image enrichie qui comprend une image à plage dynamique étendue, HDR, et la carte de gains, la carte de gains comprenant une pluralité de pixels ;
l'extraction de l'image HDR et de la carte de gains à partir de l'image enrichie ;
la génération d'une image à plage dynamique standard, SDR, en utilisant l'image HDR et la carte de gains ;
la réception et l'application de premières instructions de modification à l'égard de l'image HDR ;
la génération de secondes instructions de modification basées au moins sur les premières instructions de modification ;
l'application des secondes instructions de modification à l'image SDR pour créer une image SDR modifiée ;
la génération d'une seconde carte de gains par comparaison de l'image HDR avec l'image SDR modifiée, ou *vice versa* ; et
l'incrustation de la seconde carte de gains dans l'image HDR ou l'image SDR.

7. Le support de stockage non transitoire lisible par calculateur de la revendication 6, dans lequel l'incrustation de la seconde carte de gains dans l'image HDR comprend le stockage dans l'image HDR de métadonnées représentatives de la seconde carte de gains.

8. Le support de stockage non transitoire lisible par calculateur de la revendication 6, dans lequel l'incrustation de la seconde carte de gains dans l'image HDR comprend l'imbrication d'un pixel donné de la seconde carte de gains entre deux pixels de l'image HDR.

9. Le support de stockage non transitoire lisible par calculateur de la revendication 6, dans lequel l'incrustation de la seconde carte de gains dans l'image HDR comprend l'incrustation d'un pixel particulier de la seconde carte de gains dans un pixel correspondant de l'image HDR en tant que canal additionnel du pixel correspondant.

10. Le support de stockage non transitoire lisible par calculateur de la revendication 6, dans lequel l'application des premières instructions de modification à l'égard de l'image HDR comprend l'application d'un marqueur à l'image HDR.

11. Un dispositif informatique configuré pour utiliser une carte de gains pour gérer des modifications apportées à différentes versions d'une image, le dispositif informatique comprenant :
au moins un processeur ; et
au moins une mémoire stockant des instructions qui, lorsqu'elles sont exécutées par l'au moins un processeur, font en sorte que le dispositif informatique exécute des étapes qui comprennent :
l'accès à une image enrichie qui comprend une image à plage dynamique étendue, HDR, et la carte de gains, la carte de gains comprenant une pluralité de pixels ;
l'extraction de l'image HDR et de la carte de gains à partir de l'image enrichie ;
la génération d'une image à plage dynamique standard, SDR, en utilisant l'image HDR et la carte de gains ;
la réception et l'application de premières instructions de modification à l'égard de l'image HDR ;
la génération de secondes instructions de modification basées au moins sur les premières instructions de modification ;
l'application des secondes instructions de modification à l'image SDR pour créer une image SDR modifiée ;
la génération d'une seconde carte de gains par comparaison de l'image HDR avec l'image SDR modifiée, ou *vice versa* ; et
l'incrustation de la seconde carte de gains dans l'image HDR ou l'image SDR.

12. Le dispositif informatique de la revendication 11, dans lequel l'incrustation de la seconde carte de gains dans l'image HDR comprend le stockage dans l'image HDR de métadonnées représentatives de la seconde carte de gains.

13. Le dispositif informatique de la revendication 11, dans lequel l'incrustation de la seconde carte de gains dans l'image HDR comprend l'imbrication d'un pixel donné de la seconde carte de gains entre deux pixels de l'image HDR.

14. Le dispositif informatique de la revendication 11, dans lequel l'incrustation de la seconde carte de gains dans l'image HDR comprend l'incrustation d'un pixel particulier de la seconde carte de gains dans un pixel correspondant de l'image HDR en tant que canal additionnel du pixel correspondant.

15. Le dispositif informatique de la revendication 11, dans lequel l'application des premières instructions de modification à l'égard de l'image HDR comprend l'application d'un marqueur à l'image HDR.
